(19) Europäisches Patentamt
European Patent Office
Office européen des brevets

(11) **EP 2 007 133 A2**

(12) **EUROPEAN PATENT APPLICATION**
published in accordance with Art. 153(4) EPC

(43) Date of publication:
**24.12.2008 Bulletin 2008/52**

(51) Int Cl.:
*H04N 5/232* (2006.01)    *H04N 5/335* (2006.01)
*H04N 101/00* (2006.01)

(21) Application number: **07741070.2**

(22) Date of filing: **05.04.2007**

(86) International application number:
**PCT/JP2007/057634**

(87) International publication number:
**WO 2007/119680 (25.10.2007 Gazette 2007/43)**

(30) Priority: **11.04.2006 JP 2006108948**
**11.04.2006 JP 2006108949**

(71) Applicant: **Panasonic Corporation**
**Kadoma-shi**
**Osaka 571-8501 (JP)**

(72) Inventors:
• **NAKASHIMA, Toshiyuki**
**c/o Matsushita El. Ind. Co., Ltd.**
**Chuo-ku, Osaka-shi, Osaka, 540-6207 (JP)**

• **NISHIZAWA, Masato**
**c/o Matsushita El. Ind. Co., Ltd.**
**Chuo-ku, Osaka-shi, Osaka, 540-6207 (JP)**
• **MIYAKE, Kazunaga**
**c/o Matsushita El. Ind. Co., Ltd.**
**Chuo-ku, Osaka-shi, Osaka, 540-6207 (JP)**

(74) Representative: **Pautex Schneider, Nicole**
**Véronique et al**
**Novagraaf International SA**
**25, avenue du Pailly**
**1220 Les Avanchets - Geneva (CH)**

(54) **IMAGE PICKUP DEVICE**

(57)    The present invention provides an image pickup device which is lower in production cost and smaller in size than the conventional image pickup device.

The image pickup device 1 comprises an image sensor 12 having an acceptance surface to pick up an image focused on the acceptance surface via a lens 11, an image stabilization section 13 for stabilizing the image by compensating a blur occurring in the image on the basis of at least two different images picked up by the image sensor 12 exposed for respective different exposure times, and an output section 14 for outputting the stabilized image. The image stabilization section 13 includes an appropriate exposure image obtaining section 21 for obtaining an appropriate exposure image $i_a$ picked up by the image sensor 12 exposed for an appropriate exposure time, a short-time exposure image obtaining section 22 for obtaining an short-time exposure image $i_s$ picked up by the image sensor 12 exposed for a short exposure time shorter than the appropriate exposure time, an image stabilization trajectory calculating section 23 for calculating an image stabilization trajectory of the appropriate exposure image, and a stabilized image producing section 24 for producing the stabilized image $i_c$ on the basis of the appropriate exposure image $i_a$ and the image stabilization trajectory.

FIG.1

**Description**

**Technical Field**

The present invention relates to an image pickup device for compensating a blur occurring in an object image due to vibration of the image pickup device at the time of taking the object image with a solid-state image sensor or the like.

**Background Art**

The conventional image pickup device of this type is, for example, disclosed by the Patent Document 1. The conventional image pickup device comprises an image sensor for picking up an object image, a stage for mounting thereon the image sensor, a voice coil motor for driving the stage, and an angular rate sensor for detecting the amount of a blur occurring in the object image. In the conventional image pickup device, the stage mounting thereon the image sensor is driven by the voice coil motor in response to the amount of the blur detected by the angular rate sensor. The conventional image pickup device can therefore decrease the blur occurring in the object image.
Patent Document 1: Japanese Patent Laid-Open Publication 2005-184122

**Disclosure of Invention**

**Problem to be Solved by the Invention**

The conventional image pickup device disclosed in the Patent Document 1, however, is required to have a dedicated device built in a main unit in order to detect the amount of the blur. The dedicated device is constituted by the angular rate sensor, the stage, the voice coil motor and the like. The conventional image pickup device is, therefore, difficult in reduction of production cost and size. This leads to the fact that the conventional image pickup device disclosed in the Patent Document 1 can not apply to a digital still camera or camera-equipped mobile phone desired for reduction in production cost, size and weight.
It is, therefore, an object of the present invention to provide an image pickup device which is lower in production cost and smaller in size than the conventional image pickup device.

**Means for Resolving the Problem**

According to one aspect of the present invention, there is provided an image pickup device comprising: an image sensor having an acceptance surface to pick up an image focused on the acceptance surface; an image stabilization section for stabilizing the image by compensating a blur occurring in the image on the basis of at least two different images picked up by the image sensor exposed for each different exposure time; and an output section for outputting the stabilized image.

**Effects of the Invention**

The present invention provides an image pickup device which is lower in production cost and smaller in size than the conventional image pickup device.

**Brief Description of the Drawings**

[FIG. 1] FIG. 1 is a block diagram showing a first preferred embodiment of the image pickup device according to the present invention.
[FIG. 2] FIG. 2 is a block diagram showing a hardware construction of the image pickup device according to the present invention.
[FIG. 3] FIG. 3 is a flow chart of an image stabilizing program executed by a CPU of the image pickup device according to the present invention.
[FIG. 4] FIG. 4 is a flow chart of a first image stabilizing routine executed by the CPU of the image pickup device according to the present invention.
[FIG. 5] FIG. 5 is a flow chart of an image stabilization trajectory calculation routine executed by the CPU of the image pickup device according to the present invention.
[FIG. 6] FIG. 6 is a flow chart of a stabilized image producing routine executed by the CPU of the image pickup device according to the present invention.

[FIG. 7] FIG. 7 is a block diagram showing a second preferred embodiment of the image pickup device according to the present invention.

[FIG. 8] FIG. 8 is a flow chart of a second image stabilizing routine executed by the CPU of the image pickup device according to the present invention.

[FIG. 9] FIG. 9 is a block diagram showing a third preferred embodiment of the image pickup device according to the present invention.

[FIG. 10] FIG. 10 is a flow chart of an operation of the third preferred embodiment of the image pickup device according to the present invention.

[FIG. 11] FIG. 11 is an explanation view of examples of reading a high frequency region and an entire pixel region in the third preferred embodiment of the image pickup device according to the present invention, where FIG. 11 (a) is an explanation view of the example of reading image data of the high frequency region, and FIG. 11 (b) is an explanation view of the example of reading image data of the entire pixel region.

[FIG. 12] FIG. 12 is a block diagram showing a fourth preferred embodiment of the image pickup device according to the present invention.

[FIG. 13] FIG. 13 is a flow chart of an operation of the fourth preferred embodiment of the image pickup device according to the present invention.

[FIG. 14] FIG. 14 is a block diagram showing a fifth preferred embodiment of the image pickup device according to the present invention.

[FIG. 15] FIG. 15 is a schematic diagram to explain a blur trajectory thinning section, which constitutes the fifth preferred embodiment of the image pickup device according to the present invention.

[FIG. 16] FIG. 16 is a flow chart of an operation of the fifth preferred embodiment of the image pickup device according to the present invention.

[FIG. 17] FIG. 17 is a flow chart of a thinning operation of the fifth preferred embodiment of the image pickup device according to the present invention.

[FIG. 18] FIG. 18 is a block diagram showing a sixth preferred embodiment of the image pickup device according to the present invention.

[FIG. 19] FIG. 19 is a flow chart of an operation of the sixth preferred embodiment of the image pickup device according to the present invention.

[FIG. 20] FIG. 20 is a flow chart of a calculating the amount of a blur, the operation being performed by the sixth preferred embodiment of the image pickup device according to the present invention.

**Explanation of Reference Numerals**

| | |
|---|---|
| 1, 2, 3, 4, 5, 6 | image pickup device |
| 11, 16 | lens |
| 12 | image sensor |
| 13 | image stabilization section |
| 14 | output section |
| 21 | appropriate exposure image obtaining section |
| 22 | short-time exposure image obtaining section |
| 23 | image stabilization trajectory calculating section |
| 24 | stabilized image producing section |
| 31 | drive section |
| 32 | record section |
| 33 | display section |
| 34 | pointing section |
| 35 | micro processor section |
| 41 | image signal reading I/F |
| 42 | control command outputting I/F |
| 43 | CPU |
| 44 | image signal outputting I/F |
| 45 | memory |
| 46 | operation command reading I/F |
| 51 | noise-cancellation section |
| 62 | imaging section (appropriate and short-time exposure image obtaining sections) |

| 62a | image sensor |
| 62b | electronic shutter |
| 63 | shutter button |
| 64 | recording device (output section) |
| 65 | display device (output section) |
| 70, 90, 110, 130 | image processing apparatus |
| 71, 131 | ADC |
| 72 | mode setting section (appropriate and short-time exposure image obtaining sections and pixel resetting section) |
| 73, 133 | high frequency region detecting section |
| 74, 134 | memory section |
| 74a | short-time exposure memory |
| 74b | appropriate exposure memory |
| 75, 136 | blur trajectory calculating section |
| 76, 137 | image stabilization section |
| 77, 138 | signal processing section |
| 80 | entire pixel region |
| 81 | high frequency region |
| 82, 83 | low frequency region |
| 95 | image reducing section |
| 96 | reduced image stabilization section |
| 97 | difference image calculating section |
| 98 | difference image magnifying and adding section |
| 115 | blur trajectory thinning section |
| 132 | mode setting section (short-time exposure image obtaining section) |
| 134a | first memory |
| 134b | second memory |
| 134c | accumulation memory |
| 135 | motion vector detecting section |
| 138 | signal processing section |

**Description of the Preferred Embodiments**

The preferred embodiments of the image pickup device equipped with the image stabilization feature according to the present invention will be described hereinafter with reference to the drawings.

In this description, the term "image stabilization trajectory" hereinafter described is intended to indicate the term "frequency domain image stabilization trajectory" or "time domain image stabilization trajectory" as a generic term.

(First Preferred Embodiment)

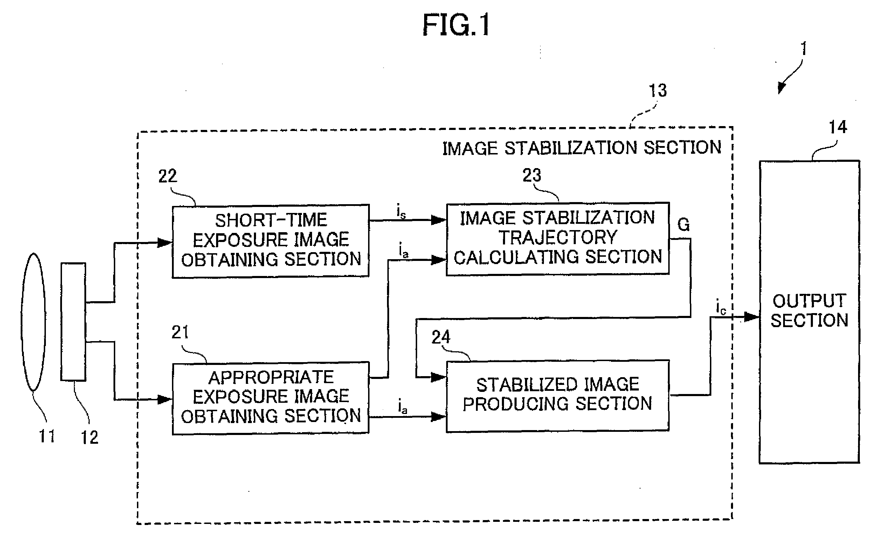

As shown in FIG. 1, the first preferred embodiment of the image pickup device 1 equipped with the image stabilization feature according to the present invention comprises an image sensor 12 having an acceptance surface to pick up an image focused on the acceptance surface via a lens 11, an image stabilization section 13 for stabilizing the image by compensating a blur occurring in the image on the basis of at least two different images picked up by the image sensor 12 exposed for respective different exposure times, and an output section 14 for outputting the stabilized image.

The image stabilization section 13 includes an appropriate exposure image obtaining section 21 for obtaining an appropriate exposure image $i_a$ picked up by the image sensor 12 exposed for an appropriate exposure time determined in accordance with an appropriate imaging condition, a short-time exposure image obtaining section 22 for obtaining an short-time exposure image $i_s$ picked up by the image sensor 12 exposed for a short exposure time shorter than the appropriate exposure time, an image stabilization trajectory calculating section 23 for calculating an image stabilization trajectory of the appropriate exposure image $i_a$ on the basis of the appropriate and short-time exposure images $i_a$ and $i_s$, and a stabilized image producing section 24 for producing the stabilized image $i_c$ on the basis of the appropriate exposure image $i_a$ and the image stabilization trajectory.

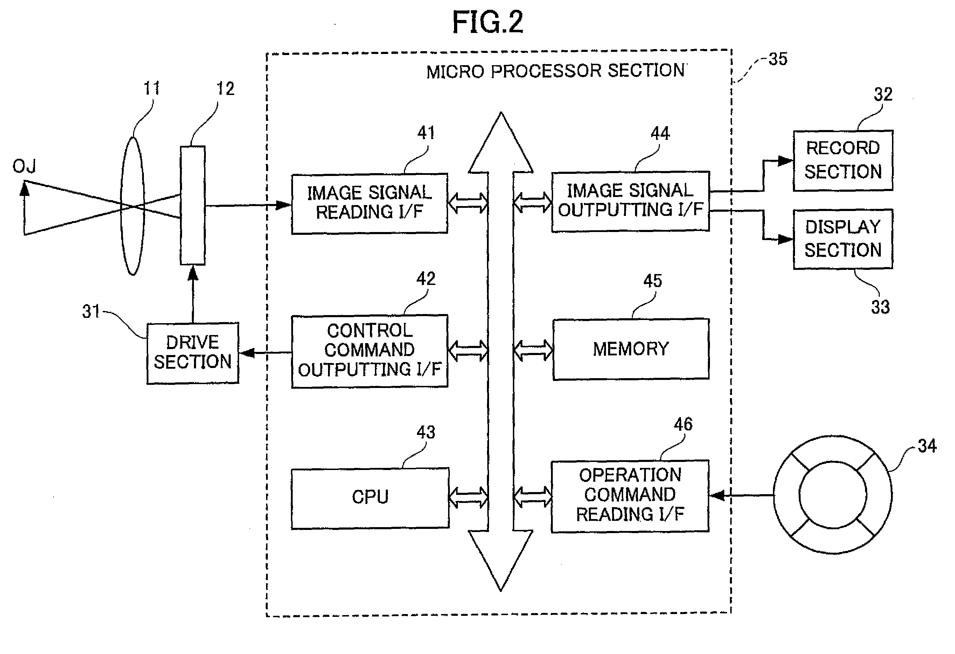

FIG. 2 is a block diagram showing a hardware construction of the image pickup device 1 equipped with the image stabilization feature according to the present invention. The image pickup device 1 has a hardware construction constituted by a lens 11 for focusing an optical image of an object **OJ**, an image sensor 12 for receiving the optical image focused thereon, a drive section 31 for controlling the image sensor 12, a record section 32 for recording therein the focused image, a display section 33 for displaying thereon the focused image, a pointing section 34 for inputting therein an operation command, and a micro processor section 35 for controlling the image pickup device 1. The record or display section 32 or 33 constitutes an outputting section according to the present invention.

The micro processor section 35 includes an image signal reading interface (I/F) 41 for reading an image signal outputted from the image sensor 12, a control command outputting I/F 42 for outputting a control command to the drive section 31, a CPU 43 for executing operations, an image signal outputting I/F 44 for outputting the image signal to the record and display sections 32 and 33, a memory 45 for storing therein an operation program, and an operation command reading I/F 46 for reading the operation command from the pointing section 34.

The image pickup device 1 is equipped with the image stabilization feature by an image stabilization program installed to the memory 45 of the micro processor section 35.

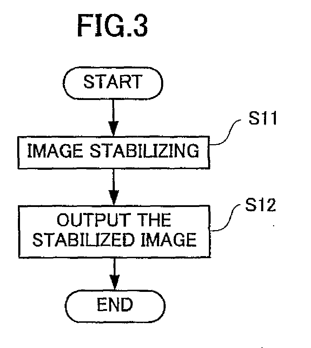

FIG. 3 is a flow chart of the image stabilizing program. The CPU 43 executing the program firstly executes an image stabilizing routine (in the step S11), and finally outputs the stabilized image $i_c$ to the record and display sections 32 and 33 (in the step S 12).

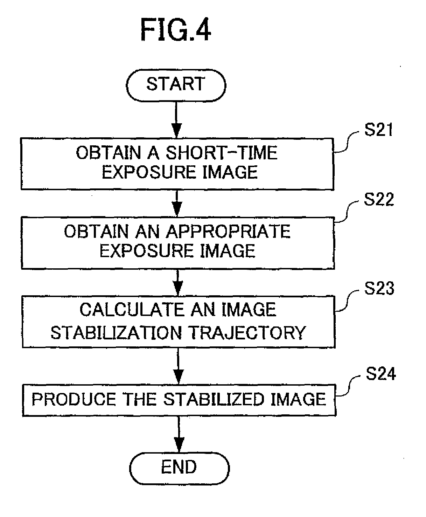

FIG. 4 is a flow chart of a first image stabilizing routine executed in the step S11. The CPU 43 firstly obtains the short-time exposure image $i_s$ picked up with the short exposure time shorter than the appropriate exposure time (in the step S21), and obtains the appropriate exposure image $i_a$ picked up with the appropriate exposure time (in the step S22). The CPU 43 may be programmed to obtain the short-time exposure image $i_s$ after the appropriate exposure image $i_a$.

The appropriate and short-time exposure images $i_a$ and $i_s$ picked up by use of a mechanical or electric shutter are respectively converted by the image sensor 12 into the image signals. The image signals are read as digital data via the image signal reading I/F 41.

The CPU 43 then calculates the image stabilization trajectory (in the step S23) and produces the stabilized image $i_c$ (in the step S24), as hereinafter described in detail.

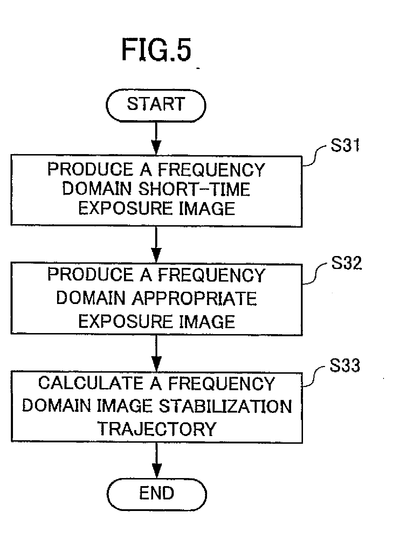

FIG. 5 is a flow chart of an image stabilization trajectory calculation routine executed by the CPU 43 in the step S23. The CPU 43 firstly performs a Fourier transform on the short-time exposure image $i_s$ to produce a frequency domain short-time exposure image $I_s$ (in the step S31). The relation between the frequency domain short-time exposure image $I_s$ and the short-time exposure image $i_s$ is expressed by the following equation 1.

$$[\text{Equation 1}]$$
$$I_s = \mathrm{F}(i_s)$$

where $\mathrm{F}(x)$ is *the Fourier transform of x.*

The CPU 43 then performs the Fourier transform on the appropriate exposure image $i_a$ to produce a frequency domain appropriate exposure image $I_a$ (in the step S32).

The relation between the frequency domain appropriate exposure image $I_a$ and the appropriate exposure image $i_a$ is expressed by the following equation 2.

$$[\text{Equation 2}]$$
$$I_a = \mathrm{F}(i_a)$$

The CPU 43 then divides the frequency domain short-time exposure image $I_s$ by the frequency domain appropriate exposure image $I_a$ to calculate a frequency domain image stabilization trajectory **G** (in the step S33). The operation in the step S33 is expressed by the following equation 3.

$$[\text{Equation 3}]$$
$$G = \frac{I_s}{I_a}$$

The following equations 4 are given, where a blur trajectory included in the appropriate exposure image $i_a$ is **h.**

[Equations 4]

$$i_a = i * h$$

$$I_a = \mathrm{F}(i * h) = I \times H$$

$$H = \mathrm{F}(h)$$

*where:*

*i = non-blurred image;*
*I = frequency domain non-blurred image;*
*H = frequency domain blur trajectory;*
*\* is the convolution operator.*

The following equations 5 are given, where the short-time exposure image $i_s$ picked up with the short exposure time shorter than the appropriate exposure time is assumed to have no blur.

[Equations 5]

$$i_s = i$$

$$I_s = \mathrm{F}(i_s) = \mathrm{F}(i) = I$$

The following equation 6 is obtained from the equation 3 with the equations 4 and 5.

[Equation 6]

$$G = \frac{I}{I \times H} = H^{-1}$$

This leads to the fact that the frequency domain image stabilization trajectory G calculated in the step S33 is an inverse of the frequency domain blur trajectory **H.**

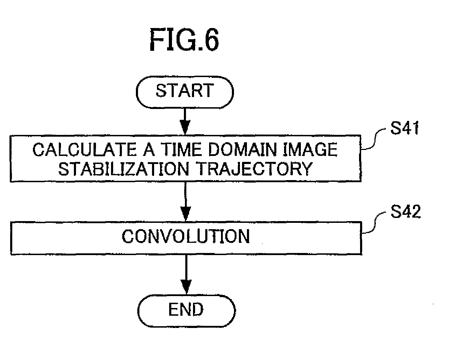

FIG. 6 is a flow chart of a stabilized image producing routine executed by the CPU 43 in the step S24. The CPU 43 firstly performs an inverse Fourier transform on the frequency domain image stabilization trajectory **G** to calculate a time domain image stabilization trajectory **g** (in the step S41).
The relation between the frequency domain image stabilization trajectory **G** and the time domain image stabilization trajectory **g** is expressed by the following equation 7.

[Equation 7]

$$g = \mathrm{F}^{-1}(G) = \mathrm{F}^{-1}(H^{-1}) = h^{-1}$$

*where* $\mathrm{F}^{-1}$ *(X) is the inverse Fourier transform of X.*
The CPU 43 then convolves the appropriate exposure image $i_a$ with the time domain image stabilization trajectory **g** to produce the stabilized image $i_c$ (in the step S42).
The operation in the step S42 is expressed by the following equation 8.

[Equation 8]

$$i_c = i_a * g = i * h * h^{-1} = i$$

This leads to the fact that the stabilized image $i_c$ is equal to the non-blurred image i, i.e., the fact that the blur can be removed from the appropriate exposure image $i_a$.

As referred to the following equation 9, it is apparent that, to produced the stabilized image $i_c$, the CPU 43 may perform the inverse Fourier transform on the frequency domain appropriate exposure image $I_a$ multiplied by the frequency domain image stabilization trajectory **G.**

[Equation 9]

$$i_c = \mathrm{F}^{-1}(I_a \times G) = \mathrm{F}^{-1}(I_a) * \mathrm{F}^{-1}(G) = i_a * g$$

As will be seen from the foregoing description, it is to be understood that the first preferred embodiment of the image pickup device 1 equipped with the image stabilization feature can calculate the image stabilization trajectory on the basis of the appropriate and short-time exposure images, and can remove the blur from the appropriate exposure image on the basis of the appropriate exposure image and the image stabilization trajectory.

(Second Preferred Embodiment)

While the short-time exposure image is assumed to have no blur in the first preferred embodiment, the short-time exposure image has a noise superimposed thereon. The appropriate exposure image also has a noise superimposed thereon.

When the short-time exposure image is picked up, the sensitivity of the electronic circuit is increased to cover a deficiency of the exposure. This results in the fact that the intensity of the noise is higher on the short-time exposure image, and the image quality of the short-time exposure image is substantially deteriorated.

When the appropriate exposure image is picked up, the noise superimposed on the appropriate exposure image is low in the intensity, but inescapable.

The second preferred embodiment of the image pickup device equipped with the image stabilization feature further has a feature for cancelling the noise from the image to resolve the problem.

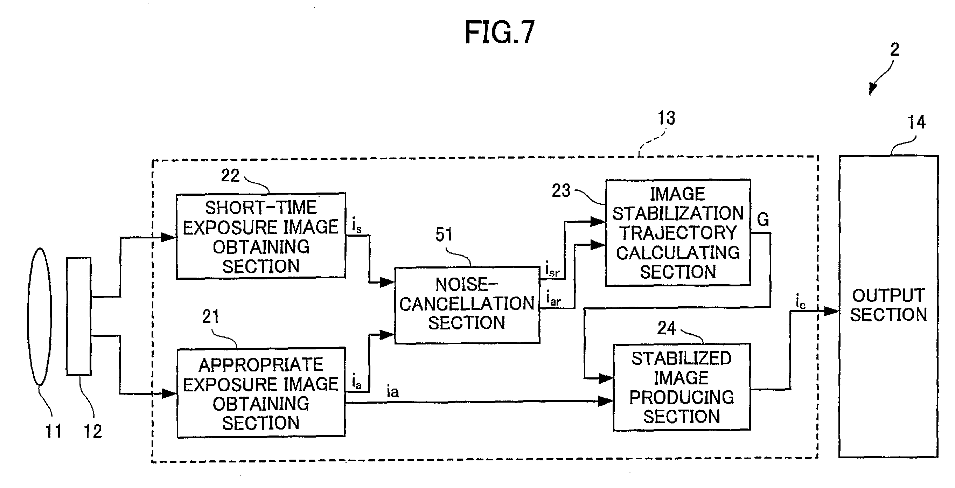

FIG. 7 is a block diagram showing the second preferred embodiment of the image pickup device 2 equipped with the image stabilization feature according to the present invention. The constituent elements of this embodiment common in that of the first preferred embodiment described above will be omitted from the following detailed description and identified by the common reference numerals, because of the fact that this embodiment has a construction largely similar to that of the first preferred embodiment.

As shown in FIG. 7, the image pickup device 2 equipped with the image stabilization feature comprises, in addition to the constituent elements of the first preferred embodiment, a noise-cancellation section 51 for cancelling the noise from the appropriate and short-time exposure images.

The second preferred embodiment of the image pickup device 2 equipped with the image stabilization feature has a hardware construction substantially similar to that of the first preferred embodiment. However, the program installed to the micro processor section 35 in the second embodiment is partially different from that in the first preferred embodiment.

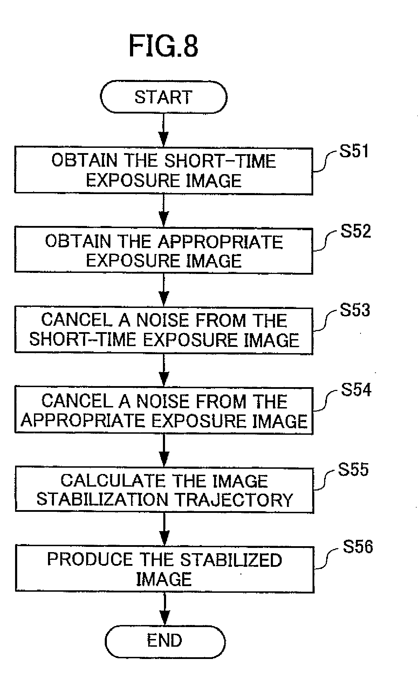

FIG. 8 is a flow chart of a second image stabilizing routine installed to the micro processor section 35 instead of the first image stabilizing routine described previously with reference to FIG. 4. The second image stabilizing routine has steps S51 and S52 between the steps S22 and S23 of the first image stabilizing routine.

The CPU 43 firstly obtains the short-time exposure image $i_s$ (in the step S51), and obtains the appropriate exposure image $i_a$ (in the step S52).

The following equations 10 are given, where the noise included in the short-time exposure image $i_s$ is $n_s$, and the noise included in the appropriate exposure image $i_a$ is $n_a$.

[Equations 10]

$$i_s = i + n_s$$

$$i_a = i * h + n_a$$

The CPU 43 then operates a high cut filter constituting the noise-cancellation section 51 to filter out the noise from the appropriate and short-time exposure images $i_a$ and is (in the steps S53 and S54).

The noise-cancelled appropriate and short-time exposure images $i_{ar}$ and $i_{sr}$ are respectively represented by the following equations 11.

[Equations 11]

$$i_{sr} = i_s * r = i * r + n_s * r$$
$$i_{ar} = i_a * r = i * h * r + n_a * r$$

The CPU 43 then calculates the image stabilization trajectory (in the step S55). The image stabilization trajectory calculation routine is similar to that of the first preferred embodiment as shown in FIG. 5.

The CPU 43 firstly performs the Fourier transform on the noise-cancelled short-time exposure image $i_{sr}$ to produce a noise-cancelled frequency domain short-time exposure image $I_{sr}$ (in the step S31). The CPU 43 then performs the Fourier transform on the noise-cancelled appropriate exposure image $i_{ar}$ to produce a noise-cancelled frequency domain appropriate exposure image $I_{ar}$ (in the step S32).

The operations in the steps S31 and S32 are respectively expressed by the following equations 12.

[Equations 12]

$$I_{sr} = \mathrm{F}(i_{sr}) = I \times R + N_s \times R$$
$$I_{ar} = \mathrm{F}(i_{ar}) = I \times H \times R + N_a \times R$$

where:

$$R = \mathrm{F}(r);$$

$$N_s = \mathrm{F}(n_s);$$

$$N_a = \mathrm{F}(n_a).$$

The noise is randomly generated largely in a high frequency region. The noise is therefore cancelled by the high cut filter. This leads to the fact that the equations 12 are respectively approximated by the following equations 13.

[Equations 13]

$$I_{sr} \approx I \times R$$
$$I_{ar} \approx I \times H \times R$$

To cancel the noise without cancelling the frequency domain blur trajectory **H,** it is preferable that the cutoff frequency of the high cut filter be between 5 and 20Hz.

The CPU 43 then divides the noise-cancelled frequency domain short-time exposure image $I_{sr}$ by the noise-cancelled frequency domain appropriate exposure image $I_{ar}$ to calculate the frequency domain image stabilization trajectory **G** (in the step S33). The operation in the steps S31 and S32 is expressed by the following equation 14.

[Equation 14]

$$G = \frac{I_{sr}}{I_{ar}} = \frac{I \times R}{I \times H \times R} = H^{-1}$$

The CPU 43 finally produces the stabilized image $i_c$ (in the step S56). The stabilized image producing routine is similar to that of the first preferred embodiment as shown in FIG. 6.

The CPU 43 performs the inverse Fourier transform on the frequency domain image stabilization trajectory G to calculate the time domain image stabilization trajectory g (in the step S41), and convolves the appropriate exposure image $i_a$ with the time domain image stabilization trajectory g to produce the stabilized image $i_c$ (in the step S42). The operation in the step S42 is expressed by the following equation 15.

[Equation 15]

$$i_c = i_a * g = (i * h + n_a) * g = i * h * h^{-1} + n_a * h^{-1} = i + n_a * h^{-1} = i + n_a * g$$

The term $n_a$*g indicates the noise $n_a$ convolved with the image stabilization trajectory, and may be deemed to have the intensity represented by the following equation 16.

[Equation 16]

$$n_a \approx n_a * g$$

This leads to the fact that the stabilized image $i_c$ is the non-blurred image i convolved with the noise $n_a$*g. The noise $n_a$*g is low in the intensity not to considerably deteriorate the quality of the stabilized image $i_c$, because of the fact that the noise $n_a$ is low in the intensity as previously mentioned.

As referred to the following equation 17, it is apparent that, to produce the stabilized image $i_c$, the CPU 43 may perform the inverse Fourier transform on the frequency domain appropriate exposure image $I_a$ multiplied by the frequency domain image stabilization trajectory **G** as in the first preferred embodiment.

[Equation 17]

$$i_c = F^{-1}(I_a \times G) = F^{-1}(I \times H + N_a) * F^{-1}(G) = i * h * h^{-1} + n_a * h^{-1} = i + n_a * h^{-1}$$

As will be seen from the foregoing description, it is to be understood that the second preferred embodiment can compensate the blur without influence of the noise included in the short-time exposure image.

(Third Preferred Embodiment)

The construction of the third preferred embodiment of the image pickup device according to the present invention will be described hereinafter.

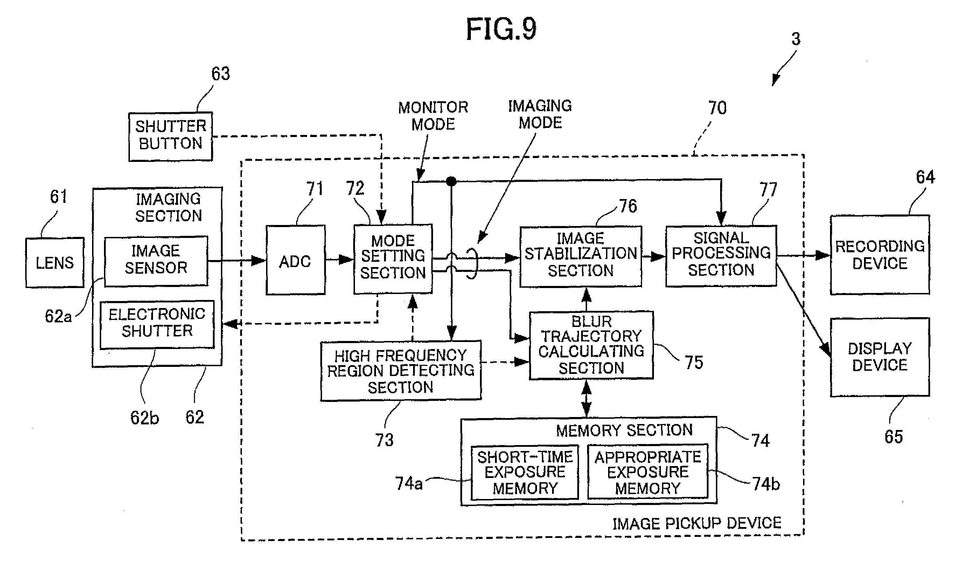

As shown in FIG. 9, the preferred embodiment of the image pickup device 3 comprises a lens 61 for focusing a light from an object, an imaging section 62 for picking up an object image of the object, a shutter button 63 operable for a user intending to pick up the object image, an image processor 70 for performing image processing on the object image, a record device 64 for recording therein data indicative of the object image, and a display device 65 for displaying thereon the object image. The data indicative of the object image is simply hereinafter referred to as "image data

The lens 61 is formed to focus the light from the object to output the focused light to the imaging section 62. The shutter button 63 is designed to output a signal, when held down by the user intending to pick up the object image, to a mode setting section 72 described hereinafter in detail.

The record device 64 has a semiconductor memory or the like to record therein the image data. The display device 65 has a liquid crystal panel to display the object image. The record or display device 64 or 65 constitutes the outputting section according to the present invention.

The imaging section 62 has an image sensor 62a for converting the object light focused by the lens 61 into an electronic signal, and an electronic shutter 62b for setting an exposure time of the image sensor 62a. The imaging section 62 constitutes appropriate and short-time exposure image obtaining sections according to the present invention.

The image sensor 62a is constituted by a solid-state image sensor, such as a CCD (Charge Coupled Device) or CMOS (Complementary Metal-Oxide Semiconductor) sensor. The image sensor 62a has a prescribed number of pixels. The electronic shutter 62b is designed to set the exposure time of the image sensor 62a on the basis of a control signal from the mode setting section 72. The image sensor 62a constitutes an image sensor according to the present invention.

The image processor 70 has an analog-to-digital converter (simply hereinafter referred to as "ADC") 71 for converting an analog signal outputted from the image sensor 62a into a digital signal, a mode setting section 72 operable to take modes on the basis of the state of the shutter button 63, a high frequency region detecting section 73 for detecting a high frequency region, a memory section 74 for storing therein the image data, a blur trajectory calculating section 75 for calculating a blur trajectory, an image stabilization section 76 for stabilizing the object image by compensating a blur occurring in the object image, and a signal processor 77 for performing predetermined signal processing. The image processor 70 is constituted by a digital signal processor or the like.

The ADC 71 is designed to convert the analog image data picked up by the image sensor 62a into a digital image data to output to the mode setting section 72.

The mode setting section 72 is operable to take any of two different modes consisting of a monitor mode and an imaging mode when receiving the signal outputted from the shutter button 63 held down by the user. Under the monitor mode, the object image picked up by the imaging section 62 is displayed on the display device 65 as a video picture with the shutter button 63 not held down by the user. Under the imaging mode, the object image is picked up when the shutter button 63 is held down by the user to obtain the still object image.

The mode setting section 72 is designed to control, under the imaging mode, the electronic shutter 62b to cause the image sensor 62a to be exposed for a predetermined appropriate or short exposure time. The short exposure time is determined to be shorter than the appropriate exposure time so as to obtain the object image without a blur and without an image signal that is transformed into noise. The appropriate exposure time is determined to cause the image sensor 62a to be appropriately exposed for the object light.

The mode setting section 72 is designed to control, under the monitor mode, the electronic shutter 62b to cause the image sensor 62a to be exposed for the appropriate exposure time to permit the display device 65 to display thereon the video picture. In case that the display device 65 is constituted by the liquid crystal panel, the mode setting section 72 should be designed to improve the frame-rate of the video picture to be displayed on the display device 65 by performing a pixel skipping on the pixel data read from the image sensor 62a, a blending of the pixel data in units of multiple pixels, and the like. This results from the fact that the resolution of the commonly used liquid crystal panel is lower than that of the image sensor 62a.

The mode setting section 72 is operable to output a control signal to the imaging section 62. This control signal indicates a command to reset the signal stored in each pixel of the image sensor 62a. The mode setting section 72 is further operable to output another control signal to the imaging section 62. This control signal indicates a command to read the image data from a specific region to output to the ADC 71. The specific region partially constitutes an entire pixel region formed with all of the pixels. The mode setting section 72 constitutes the appropriate and short-time exposure image obtaining sections and a pixel resetting section according to the present invention.

The high frequency region detecting section 73 is constituted by a high pass filter designed to pass therethrough a signal component correspoinding to an image region having a spatial frequency higher than a predetermined spatial frequency. The high frequency region detecting section 73 is designed to detect, under the monitor mode, the high frequency region having the spatial frequency higher than the predetermined spatial frequency from the entire pixel region where the object image is focused. The high frequency region detecting section 73 is therefore capable of detecting, under the monitor mode, the image region greatly influenced by a movement of the object comparatively in the pixel region of the image sensor 62a. The high frequency region detecting section 73 has a memory (not shown in the figures) for storing therein high frequency region information indecative of the detected high frequency region.

The memory section 74 has a short-time exposure memory 74a for storing therein data indicative of the object image picked up with the short exposure time (the object image is hereinafter referred to as "short-time exposure image"), and an appropriate exposure memory 74b for storing therein data indicative of the object image picked up with the appropriate exposure time (the object image is hereinafter referred to as "appropriate exposure image").

The blur trajectory calculating section 75 is designed to store, under the imaging mode, two sets of the image data corresponding to the high frequency regions of the appropriate and short-time exposure images into the respective appropriate and short-time exposure memories 74b and 74a, and compare two sets of the stored image data with each other to calculate the blur trajectory. To calculate the blur trajectory, the blur trajectory calculating section 75 is, for example, designed to perform a Fourier transform on the data indicative of the appropriate exposure image, perform the Fourier transform on the data indicative of the short-time exposure image, divide the transformed data indicative of the appropriate exposure image by the transformed data indicative of the short-time exposure image, and perform an inverse Fourier transform on the result of the division. The blur trajectory calculating section 75 constitutes an image stabilization trajectory calculating section according to the present invention.

The image stabilization section 76 is designed to stabilize the object image picked up with the appropriate exposure time on the basis of the blur trajectory calculated by the blur trajectory calculating section 75. The image stabilization section 76 is, for example, designed to convolve an image stabilization trajectory obtained from an inverse matrix of the blur trajectory calculated by the blur trajectory calculating section 75 with the data indicative of the appropriate exposure image to stabilize the object image. The image stabilization section 76 constitutes the image stabilization trajectory calculating section and a stabilized image producing section according to the present invention.

The signal processor 77 is designed to perform, under the monitor mode, signal processing for displaying the object image on the display device 65. The signal processor 77 is designed to perform, under the imaging mode, signal processing for recording the stabilized image data into the record device 64 and signal processing for displaying the stabilized image of the object on the display device 65.

The image stabilization by the blur trajectory calculating section 75 and the image stabilization section 76 will be described hereinafter with reference to the following equations as one example.

The data indicative of the appropriate exposure image is represented by the following equation, where the data indicative of the short-time exposure image is is, the data indicative of the appropriate exposure image is il, the blur trajectory of the appropriate exposure image is **h**, the data indicative of an ideal object image having no blur is i, and * is a convolution operator. This results from the fact that **il** is i having the blur expressed by a PSF (Point Spread Function) **h**.

$$il = i * h \qquad (1)$$

The following equations are given, where: the Fourier transforms of **i, is, il** and **h** are respectively **I, IS, IL** and **H; F** is the Fourier transform; and **F$^{-1}$** is the inverse Fourier transform.

$$F(i) = I \qquad (2)$$

$$F(is) = IS \qquad (3)$$

$$F(il) = IL \qquad (4)$$

$$F(h) = H \qquad (5)$$

$$F^{-1}(I) = i \qquad (6)$$

$$F^{-1}(IS) = is \qquad (7)$$

$$F^{-1}(IL) = il \qquad (8)$$

$$F^{-1}(H) = h \qquad (9)$$

The following equation is given, where the Fourier transformed data **F(is)** of the data is indicative of the short-time exposure image is divided by the Fourier transformed data **F(il)** of the data il indicative of the appropriate exposure image.

$$F(is) / F(il) = F(is) / F(i * h) = IS / (I \times H) \qquad (10)$$

The equation **IS = I** is given, because of the fact that the equation **is = i** is given where the short-time exposure image is assumed to be equal to the ideal object image having no blur. The following equation is therefore obtained by substituting both of the relationships **is = i** and **IS = I** into the above equation (10).

$$F(is) / F(il) = F(i) / F(i * h) = I / (I \times H) = 1 / H = H^{-1} \qquad (11)$$

The following equations are given, where $H^{-1}$ is the inverse matrix of H, and $h^{-1}$ is the inverse matrix of **h**.
$$F(1 / h) = F(h^{-1}) = 1 / H = H^{-1} \qquad (12)$$

$$F^{-1}(1 / H) = F^{-1}(H^{-1}) = 1/ h = h^{-1} \qquad (13)$$

The image stabilization trajectory **g** is obtained from the inverse Fourier transform of the Fourier transformed data **F(is)** of the data is indicative of the short-time exposure image divided by the data **F(il)** of the data il indicative of the appropriate exposure image. The image stabilization trajectory g is therefore obtained from the inverse Fourier transforms of both sides of the equation (11) as the following equation.
$$g = F^{-1}(H^{-1}) = h^{-1} \qquad (14)$$

The image stabilization trajectory **g** convolved with the data **il** indicative of the short-time exposure image is therefore expressed by the following equation. In this way, the ideal object image i having no blur can be calculated.
$$g * il = h^{-1} * i * h = i * (h^{-1} * h) = i \qquad (15)$$

As will be seen from the foregoing description, it is to be understood that the preferred embodiment of the image pickup device 3 can obtain the stabilized object image having no blur. The image pickup device 3 may be designed to produce, after obtaining the PSF as previously mentioned, an image stabilization matrix on the basis of the blur trajectory data, and produce a signal to stabilize the blurred image on the basis of the produced image stabilization matrix and the blurred image.

The operation of the preferred embodiment of the image pickup device 3 will be described hereinafter with reference to FIGS. 9 to 11.

The mode setting section 72 is firstly operated to take the monitor mode (in the step S61). When the mode setting section 72 takes the monitor mode, the analog image data from the imaging section 62 is converted by the ADC 71 into the digital image data. The image data is then inputted to the high frequency region detecting section 73 and the signal processor 77 via the mode setting section 72.

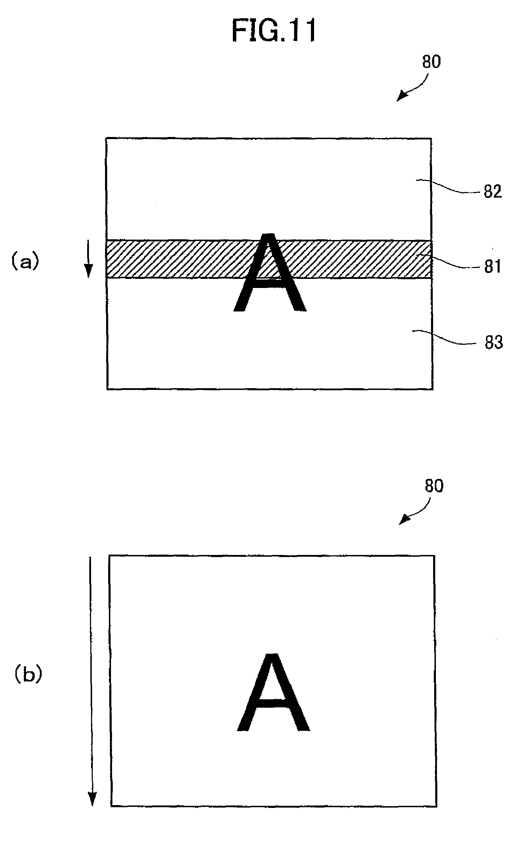

The image data inputted to the high frequency region detecting section 73 is operated to detect the high frequency region (in the step S62). As shown in FIG. 11 (a), the high frequency region detecting section 73 detects the high frequency region 81 and low frequency regions 82 and 83 from the entire pixel region 80 where the object image is focused. Each of the low frequency regions 82 and 83 has a spatial frequency lower than that of the high frequency region 81. The high frequency region detecting section 73 stores the high frequency region information indicative of the area of the high frequency region 81 into the memory.

The image data inputted to the signal processor 77 is, on the other hand, converted into predetermined formatted image data by the signal processing. The image data is then displayed on the display device 65 as the video picture.

The judgment is then made by the mode setting section 72 on whether or not the shutter button 63 is held down (in the step S63). When the judgment is made that the shutter button 63 is not held down, the operation of the image pickup device 3 returns to the step S62.

When the judgment is made in the step S63 that the shutter button 63 is held down, the mode setting section 72 is operated to take the imaging mode (in the step S64).

The electronic shutter 62b is then controlled by the mode setting section 72 to cause the image sensor 62a to be exposed for the short exposure time, and the object image is picked up with the short exposure time (in the step S65).

The high frequency region information stored in the memory of the high frequency region detecting section 73 is then read by the mode setting section 72. The imaging section 62 is then controlled by the mode setting section 72 to output the image data corresponding to the high frequency region from image data picked up with the short exposure time on the basis of the high frequency region information. The image data corresponding to the high frequency region is therefore outputted from the image sensor 62a to the ADC 71. The image data is then converted by the ADC 71 into the digital image data, and outputted to the blur trajectory calculating section 75 via the mode setting section 72. The image data is then stored by the blur trajectory calculating section 75 into the short-time exposure memory 74a (in the step S66).

All of the pixel signals stored in the image sensor 62a are then reset by the mode setting section 72 (in the step S67).

The electronic shutter 62b is then controlled by the mode setting section 72 to cause the image sensor 62a to be exposed for the appropriate exposure time, and the object image is picked up with the appropriate exposure time (in the step S68).

The imaging section 62 is then controlled by the mode setting section 72 to output the image data corresponding to the high frequency region from the image data picked up with the appropriate exposure time on the basis of the high frequency region information previously read. The image data corresponding to the high frequency region is therefore outputted from the image sensor 62a to the ADC 71. The image data is then converted by the ADC 71 into the digital image data, and outputted to the blur trajectory calculating section 75 via the mode setting section 72. The image data is then stored by the blur trajectory calculating section 75 into the appropriate exposure memory 74b (in the step S69).

The blur trajectory is then calculated by the blur trajectory calculating section 75 on the basis of the image data indicative of the short-time exposure image stored in the short-time exposure memory 74a and the image data indicative of the appropriate exposure image stored in the appropriate exposure memory 74b (in the step S70).

It is preferred that the period of time from the start of reading the image data indicative of the short-time exposure image corresponding to the high frequency region via resetting all of the pixel signals to the start of picking up of the appropriate exposure image be as short as possible (by way of example, 10 to 20ms). In this case, the difference in pickup timing between the appropriate and short-time exposure images is substantially zero. This leads to the fact that the image comparison by the blur trajectory calculating section 75 is comparatively easy and the imaging time needed to pick up a still image is shortened.

The imaging section 62 is then controlled by the mode setting section 72 to output the data of the entire pixels exposed for the appropriate exposure time, and the data of the entire pixels is outputted to the image stabilization section 76 via the ADC 71 and the mode setting section 72. An image stabilization operation is then performed by the image stabilization section 76 on the basis of the blur trajectory calculated by the blur trajectory calculating section 75, while the entire pixels is read by the image stabilization section 76 as shown in FIG. 11(b) (in the step S71). In the image stabilization operation, for example, pixel data is moved a distance in pixels corresponding to the blur trajectory. As a result, the blur occurring in the object image is compensated. In particular, the image stabilization operation for stabilizing the image in the high frequency region is performed on the image data stored in the appropriate exposure memory 74b.

In the image stabilization operation, a difference in level between the image in the high frequency region and the image in other region is caused by, for example, a dark current generated in the image sensor 62a. The difference can be decreased by adding the image data indicative of the image in the high frequency region to the image data indicative of the image in other region, or by multiplying the image data by a correction value varied in accordance with the difference.

The image data subjected to the image stabilization operation is then outputted to the signal processor 77. The image data is then converted by the signal processor 77 into the predetermined formatted image data, and outputted to the record and display devices 64 and 65.

The image data subjected to the image stabilization operation is then recorded into the record device 64, and the object image indicated by the image data subjected to the image stabilization operation is displayed on the display device 65 (in the step S72). The operation of the image pickup device 3 returns to the step S61 when continuously picking up the object image.

As will be seen from the foregoing description, it is to be understood that the blur trajectory calculating section 75 is constructed to compensate the blur occurring in the object image on the basis of the result of the comparison between the appropriate and short-time exposure images. This leads to the fact that the preferred embodiment of the image pickup device 3 is not required to have a dedicated device for detecting the blur like the conventional image pickup device. The image pickup device 3 is therefore lower in production cost and smaller in size than the conventional image pickup device.

It is also to be understood that the memory section 74 is constructed to store therein the appropriate and short-time exposure images limited to the high frequency regions detected by the high frequency region detecting section 73. This leads to the fact that the preferred embodiment of the image pickup device 3 can be provided with a memory having a capacity smaller than the capacity of a memory needed to store therein image data indicative of one frame of the short-time exposure image. This results in a reduction in the size of the memory of the imaging device 3. The image pickup device 3 is therefore smaller in size, lighter in weight and lower in production cost than the conventional image pickup device.

Although there has been described in the forgoing embodiment about the fact that the electronic shutter 62b is designed to control the exposure time of the image sensor 62a, it is not intended to limit the present invention to the description. The image pickup device 3 has the same effect under which the image pickup device 3 has a mechanical shutter in place of the electronic shutter 62b for controlling the exposure time of the image sensor 62a.

(Fourth Preferred Embodiment)

The construction of the fourth preferred embodiment of the image pickup device according to the present invention will be described hereinafter. The constituent elements of this embodiment common in that of the third preferred embodiment according to the present invention described above will be omitted from the following detailed description and identified by the common reference numerals.

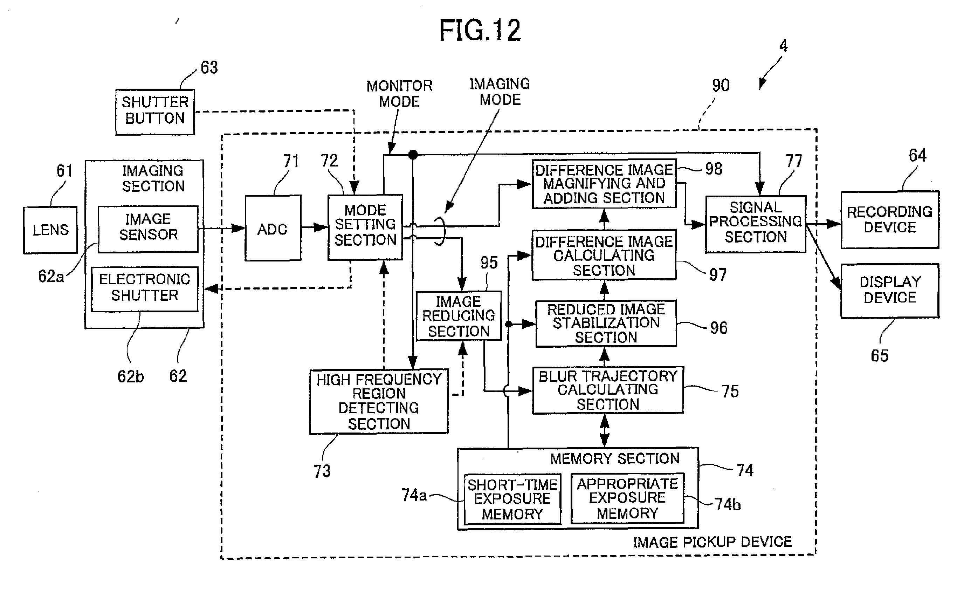

As shown in FIG. 12, the fourth preferred embodiment of the image pickup device 4 comprises an image processor 90 in place of the image processor 70 in contrast to the third preferred embodiment of the image pickup device 3 according to the present invention.

The image processor 90 has an ADC 71 for converting an analog signal outputted from the image sensor 62a into a digital signal, a mode setting section 72 operable to take modes on the basis of the state of the shutter button 63, a high frequency region detecting section 73 for detecting a high frequency region, a memory section 74 for storing therein the image data, an image reducing section 95 for reducing the image indicated by the image data, a blur trajectory calculating section 75 for calculating a blur trajectory, a reduced image stabilization section 96 for stabilizing the reduced image by compensating a blur occurring in the reduced image, a difference image calculating section 97 for calculating a difference image between the image reduced by the image reducing section 95 and the stabilized reduced image stabilized by the reduced image stabilization section 96, a difference image magnifying and adding section 98 for magnifying the difference image and adding the magnified difference image to the image having the blur, and a signal processor 77 for performing predetermined signal processing.

The image reducing section 95 is designed to perform, under the imaging mode, spatial resolution conversions to the image data corresponding to the high frequency region of the appropriate and short-time exposure images to reduce each image at a predetermined reduction ratio.

In this embodiment, the blur trajectory calculating section 75 is designed to store two sets of the image data converted by the spatial resolution conversions of the image reducing section 95 into the respective appropriate and short-time exposure memories 74b and 74a, and compare two sets of the stored image data with each other to calculate the blur trajectory. The image indicated by the image data stored in the appropriate exposure memory 74b is hereinafter referred to as "reduced appropriate exposure image".

The reduced image stabilization section 96 is designed to stabilize the reduced appropriate exposure image on the basis of the blur trajectory calculated by the blur trajectory calculating section 75.

The reduced image stabilization section 96 is, for example, designed to convolve an image stabilization trajectory obtained from an inverse matrix of the blur trajectory calculated by the blur trajectory calculating section 75 with the data indicative of the reduced appropriate exposure image to stabilize the reduced appropriate exposure image.

The difference image calculating section 97 is designed to calculate the difference image between the reduced appropriate exposure image stabilized by the reduced image stabilization section 96 and the reduced appropriate exposure image indicated by the image data stored in the appropriate exposure memory 74b.

The image reducing section 95, the reduced image stabilization section 96 and the difference image calculating section 97 integrally constitute the image stabilization trajectory calculating section according to the present invention.

The difference image magnifying and adding section 98 is designed to magnify the difference image calculated by the difference image calculating section 97, and add the magnified difference image to image data picked up with the appropriate exposure time to stabilize the object image. The magnification ratio at which the difference image magnifying and adding section 98 magnifies the difference image is an inverse of the reduction ratio at which the image reducing section 95 reduces the image.

The difference image magnifying and adding section 98 constitutes the stabilized image producing section according to the present invention.

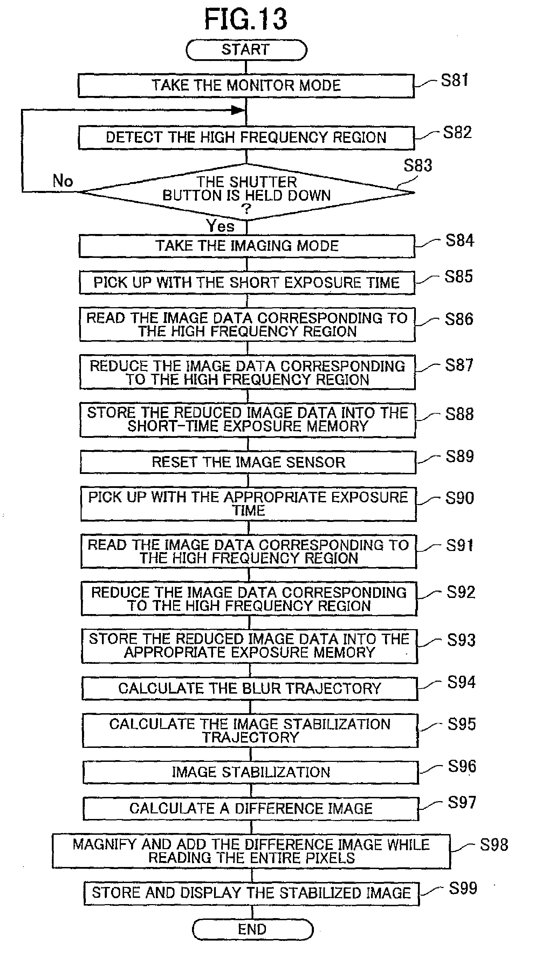

The operation of the preferred embodiment of the image pickup device 4 will be described hereinafter with reference to FIG. 13.

The mode setting section 72 is firstly operated to take the monitor mode (in the step S81). When the mode setting section 72 takes the monitor mode, the analog image data from the imaging section 62 is converted by the ADC 71 into the digital image data. The image data is then inputted to the high frequency region detecting section 73 and the signal processor 77 via the mode setting section 72.

The image data inputted to the high frequency region detecting section 73 is subjected to an operation to detect the high frequency region (in the step S82). The high frequency region information indicative of the detected high frequency region is stored by the high frequency region detecting section 73 into the memory.

The image data inputted to the signal processor 77 is, on the other hand, converted into the predetermined formatted image data by the signal processing. The image data is then displayed on the display device 65 as the video picture.

The judgment is made by the mode setting section 72 on whether or not the shutter button 63 is held down (in the step S83). When the judgment is made that the shutter button 63 is not held down, the operation of the image pickup device 4 returns to the step S82.

When the judgment is made in the step S83 that the shutter button 63 is held down, the mode setting section 72 is operated to take the imaging mode (in the step S84).

The electronic shutter 62b is then controlled by the mode setting section 72 to cause the image sensor 62a to be exposed for the short exposure time, and the object image is picked up with the short exposure time (in the step S85).

The high frequency region information stored in the memory of the high frequency region detecting section 73 is then read by the mode setting section 72. The imaging section 62 is then controlled by the mode setting section 72 to output the image data corresponding to the high frequency region from image data picked up with the short exposure time on the basis of the high frequency region information (in the step S86).

The image data corresponding to the high frequency region is therefore outputted from the image sensor 62a to the ADC 71. The image data is then converted by the ADC 71 into the digital image data, and outputted to the image reducing section 95 via the mode setting section 72. The image data is then converted by the spatial resolution conversion of the image reducing section 95 to indicate the high frequency region of the short-time exposure image reduced at the predetermined reduction ratio (in the step S87). The converted image data is stored by the blur trajectory calculating section 75 into the short-time exposure memory 74a (in the step S88).

All of the pixel signals stored in the image sensor 62a are then reset by the mode setting section 72 (in the step S89).

The electronic shutter 62b is then controlled by the mode setting section 72 to cause the image sensor 62a to be exposed for the appropriate exposure time, and the object image is picked up with the appropriate exposure time (in the step S90).

The imaging section 62 is then controlled by the mode setting section 72 to output the image data corresponding to the high frequency region from the image data picked up with the appropriate exposure time on the basis of the high frequency region information previously read (in the step S91).

The image data corresponding to the high frequency region is therefore outputted from the image sensor 62a to the ADC 71. The image data is then converted by the ADC 71 into the digital image data, and outputted to the image reducing section 95 via the mode setting section 72. The image data is then converted by the spatial resolution conversion of the image reducing section 95 to indicate the high frequency region of the appropriate exposure image reduced at the predetermined reduction ratio (in the step S92). The converted image data is stored by the blur trajectory calculating section 75 into the appropriate exposure memory 74b (in the step S93).

The blur trajectory is then calculated by the blur trajectory calculating section 75 on the basis of the image data indicative of the short-time exposure image stored in the short-time exposure memory 74a and the image data indicative of the appropriate exposure image stored in the appropriate exposure memory 74b (in the step S94).

The image stabilization trajectory is then calculated by the reduced image stabilization section 96 on the basis of the inverse matrix of the blur trajectory (in the step S95). The blur of the reduced appropriate exposure image stored in the appropriate exposure memory 74b is then compensated by the reduced image stabilization section 96 by convoluting with the calculated image stabilization trajectory (in the step S96).

The difference image obtained from the difference between the reduced appropriate exposure image stabilized by the reduced image stabilization section 96 and the reduced appropriate exposure image indicated by the image data stored in the appropriate exposure memory 74b is then calculated by the difference image calculating section 97 (in the step S97).

The imaging section 62 is then controlled by the mode setting section 72 to output the data of the entire pixels exposed for the appropriate exposure time, and the data of the entire pixels is outputted to the difference image magnifying and adding section 98 via the ADC 71 and the mode setting section 72.

The image stabilization operation is then performed on the image data indicative of the object image. In the image stabilization operation, the difference image calculated by the difference image calculating section 97 is then magnified by the difference image magnifying and adding section 98, and added to the entire pixels indicative of the data inputted to the difference image magnifying and adding section 98 (in the step S98).

The image data subjected to the image stabilization operation is then outputted to the signal processor 77. The image data is then converted by the signal processor 77 into the predetermined formatted image data, and outputted to the record and display devices 64 and 65.

The image data subjected to the image stabilization operation is then recorded into the record device 64, and the object image indicated by the image data subjected to the image stabilization operation is displayed on the display device 65 (in the step S99). The operation of the image pickup device 4 returns to the step S81 when continuously picking up the object image.

As will be seen from the foregoing description, it is to be understood that the preferred embodiment of the image pickup device 4 is designed to calculate the image stabilization trajectory on the basis of two sets of the image data indicative of the respective reduced appropriate and short-time exposure images. This leads to the fact that the image pickup device 4 can decrease a calculation amount and a circuit size to calculate the image stabilization trajectory. The image pickup device 4 is therefore lower in power consumption, lower in production cost and smaller in size than the conventional image pickup device.

(Fifth Preferred Embodiment)

The construction of the fifth preferred embodiment of the image pickup device according to the present invention will be described hereinafter. The constituent elements of this embodiment common in that of the third preferred embodiment according to the present invention described above will be omitted from the following detailed description and identified by the common reference numerals.

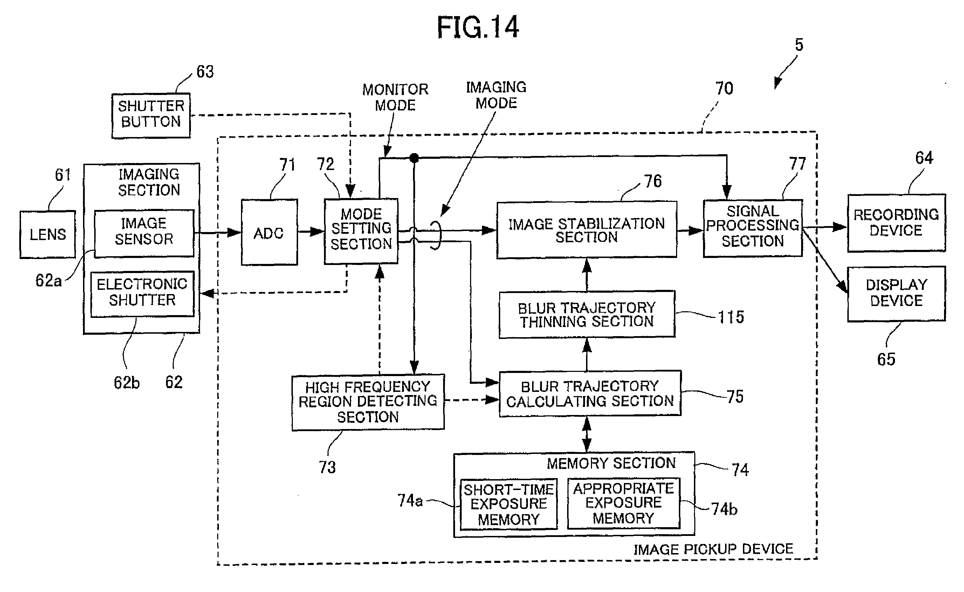

As shown in FIG. 14, the fifth preferred embodiment of the image pickup device 5 comprises an image processor 110 in place of the image processor 70 in contrast to the third preferred embodiment of the image pickup device 3 according to the present invention.

The image processor 110 has an ADC 71 for converting an analog signal outputted from the image sensor 62a into a digital signal, a mode setting section 72 operable to take modes on the basis of the state of the shutter button 63, a high frequency region detecting section 73 for detecting a high frequency region, a memory section 74 for storing therein the image data, a blur trajectory calculating section 75 for calculating a blur trajectory, a blur trajectory thinning section 115 for performing a thinning on the blur trajectory, an image stabilization section 76 for stabilizing the image by compensating a blur occurring in the object image, and a signal processor 77 for performing predetermined signal processing.

Hereinafter, each of the pixels constituting the blur trajectory is referred to as "target pixel", and each of the pixels adjacently located on left, right, top and bottom side of the target pixel is referred to as "adjacent pixel" of the target pixel. The blur trajectory thinning section 115 is designed to perform the thinning on the calculated blur trajectory in case that any of the adjacent pixels of each target pixel is not located on the blur trajectory, i.e. that any of the adjacent pixels of each target pixel has a value 0.

Hereinafter, each of the pixels located on symmetric side of each adjacent pixel with respect to the target pixel is referred to as "symmetric adjacent pixel" of the adjacent pixel. The blur trajectory thinning section 115 is designed to calculate a weighted average efficiency of symmetric adjacent pixels of each adjacent pixel of each target pixel. The blur trajectory thinning section 115 is designed to remove the target pixel from the blur trajectory, by way of example, set the value of the target pixel to 0, in case that the proportion of any of the weighted average efficiencies to the value of the target pixel is higher than or equal to a predetermined threshold.

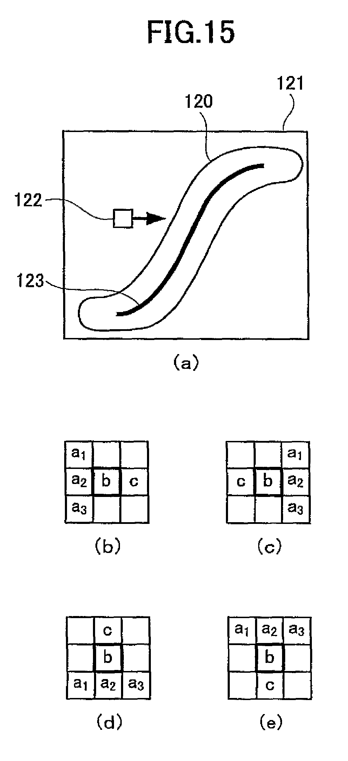

As shown in FIG. 15(a), the blur trajectory thinning section 115 is designed to scan each pixels of the image 121 as the target pixel 122. The image 121 includes region 120 corresponding to the calculated blur trajectory. As shown in FIG. 15(b), the blur trajectory thinning section 115 is designed to calculate, in case that the value c of the adjacent pixel located on right side of the target pixel is not 0, the weighted average efficiency **a** on the basis of the value **a1, a2** and **a3** of the respective symmetric adjacent pixels located on left side of the adjacent pixel as a = (**a1** + 2 $\times$ **a2** + **a3**) / 4.

The blur trajectory thinning section 115 is designed to calculate the proportion R of the weighted average efficiencies **a** to the value **b** of the target pixel as **R** = **a / b,** and remove the target pixel from the blur trajectory in case that the calculated proportion **R** is higher than or equal to the predetermined threshold.

In a similar fashion as shown in FIGS. 15(b) to (d), the blur trajectory thinning section 115 is designed to calculate, in case that the value c of each adjacent pixel is not 0, each of the weighted average efficiencies a of the symmetric adjacent pixels located on right, top and bottom side of each adjacent pixel. The blur trajectory thinning section 115 is designed to calculate the proportion **R** of each weighted average efficiency a to the value b of the target pixel, and remove the target pixel from the blur trajectory in case that the calculated proportion **R** is higher than or equal to the predetermined threshold. As will be seen from the foregoing description, it is to be understood that the region 120 of the blur trajectory is thinned to the region 123 as shown in FIG. 15(a).

In FIG. 14, the blur trajectory thinning section 115 is designed to store two sets of the converted image data into the respective appropriate and short-time exposure memories 74b and 74a, and compare two sets of the stored image data with each other to calculate the blur trajectory. The blur trajectory thinning section 115 constitutes the image stabilization trajectory calculating section according to the present invention.

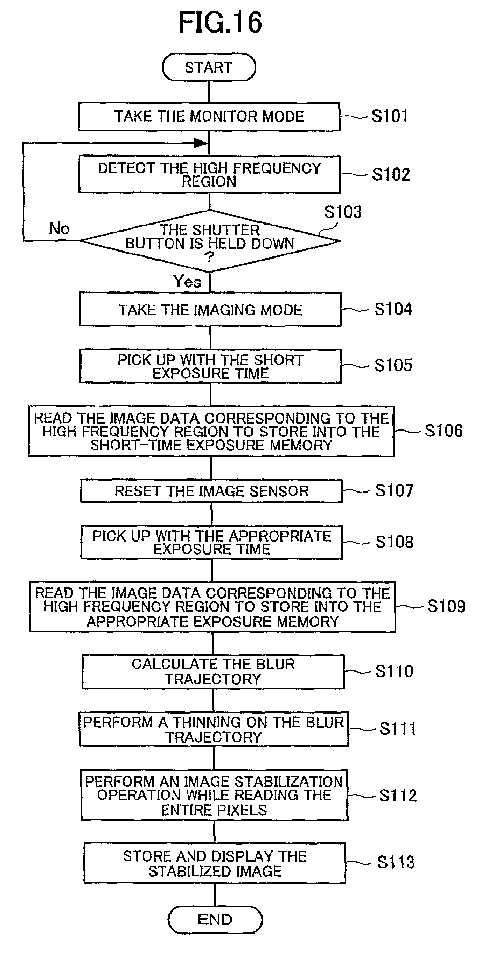

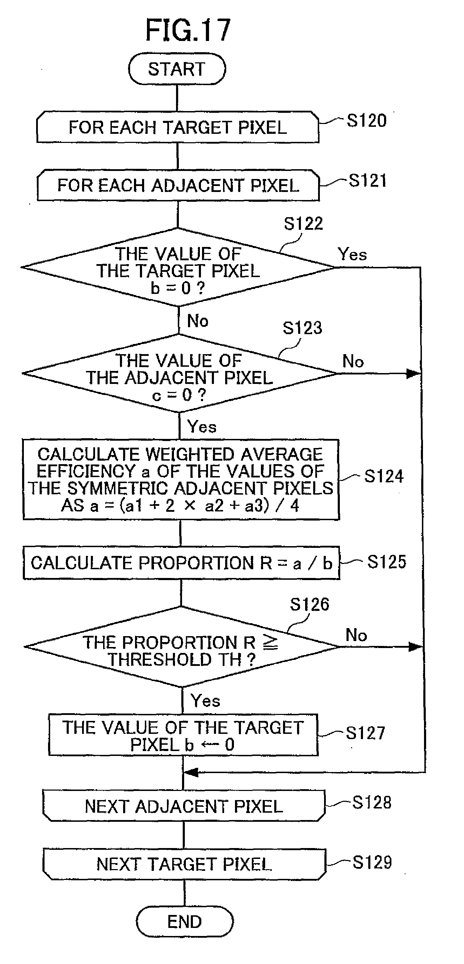

The operation of the preferred embodiment of the image pickup device 5 will be described hereinafter with reference to FIGS. 16 and 17.

The mode setting section 72 is firstly operated to take the monitor mode (in the step S101). When the mode setting section 72 takes the monitor mode, the analog image data obtained from the imaging section 62 is converted by the ADC 71 into the digital image data. The image data is then inputted to the high frequency region detecting section 73 and the signal processor 77 via the mode setting section 72.

The image data inputted to the high frequency region detecting section 73 is subjected to an operation to detect the high frequency region (in the step S102). The high frequency region information indicative of the detected high frequency region is then stored by the high frequency region detecting section 73 into the memory.

The image data inputted to the signal processor 77 is, on the other hand, converted into the predetermined formatted image data by the signal processing. The image data is then displayed on the display device 65 as the video picture.

The judgment is made by the mode setting section 72 on whether or not the shutter button 63 is held down (in the step S103). When the judgment is made that the shutter button 63 is not held down, the operation of the image pickup device 5 returns to the step S102.

When the judgment is made in the step S103 that the shutter button 63 is held down, the mode setting section 72 is operated to take the imaging mode (in the step S104).

The electronic shutter 62b is then controlled by the mode setting section 72 to cause the image sensor 62a to be exposed for the short exposure time, and the object image is picked up with the short exposure time (in the step S105).

The high frequency region information stored in the memory of the high frequency region detecting section 73 is then read by the mode setting section 72. The imaging section 62 is then controlled by the mode setting section 72 to output the image data corresponding to the high frequency region from image data picked up with the short exposure time on the basis of the high frequency region information. The image data corresponding to the high frequency region is therefore outputted from the image sensor 62a to the ADC 71. The image data is then converted by the ADC 71 into the digital image data, and outputted to the blur trajectory calculating section 75 via the mode setting section 72. The image data is then stored by the blur trajectory calculating section 75 into the short-time exposure memory 74a (in the step S106).

All of the pixel signals stored in the image sensor 62a are then reset by the mode setting section 72 (in the step S107).

The electronic shutter 62b is then controlled by the mode setting section 72 to cause the image sensor 62a to be exposed for the appropriate exposure time, and the object image is picked up with the appropriate exposure time (in the step S108).

The imaging section 62 is then controlled by the mode setting section 72 to output the image data corresponding to the high frequency region from the image data picked up with the appropriate exposure time on the basis of the high frequency region information previously read. The image data corresponding to the high frequency region is therefore outputted from the image sensor 62a to the ADC 71. The image data is then converted by the ADC 71 into the digital image data, and outputted to the blur trajectory calculating section 75 via the mode setting section 72. The image data is then stored by the blur trajectory calculating section 75 into the appropriate exposure memory 74b (in the step S109).

The blur trajectory is then calculated by the blur trajectory calculating section 75 on the basis of the image data indicative of the short-time exposure image stored in the short-time exposure memory 74a and the image data indicative of the appropriate exposure image stored in the appropriate exposure memory 74b (in the step S110). The thinning is then performed by the blur trajectory thinning section 115 on the calculated blur trajectory as described hereinafter in detail (in the step S111).

The imaging section 62 is then controlled by the mode setting section 72 to output the data of the entire pixels exposed for the appropriate exposure time, and the data of the entire pixels is outputted to the image stabilization section 76 via the ADC 71 and the mode setting section 72. The image stabilization operation is performed by the image stabilization section 76 on the basis of the blur trajectory thinned by the blur trajectory thinning section 115, while the entire pixels is read by the image stabilization section 76 (in the step S112). In the image stabilization operation, for example, pixel data is moved a distance in pixels corresponding to the blur trajectory. As a result, the blur occurring in the object image is compensated. In particular, the image stabilization operation for stabilizing the image in the high frequency region is performed on the image data stored in the appropriate exposure memory 74b.

In the image stabilization operation, a difference in level between the image in the high frequency region and the image in other region is caused by, for example, a dark current generated in the image sensor 62a. The difference can be reduced by adding the image data indicative of the image in the high frequency region to the image data indicative of the image in other region, or by multiplying the image data by a correction value relative to the difference.

The image data subjected to the image stabilization operation is then outputted to the signal processor 77. The image data is then converted by the signal processor 77 into the predetermined formatted image data, and outputted to the record and display devices 64 and 65.

The image data subjected to the image stabilization operation is then recorded into the record device 64, and the object image indicated by the image data subjected to the image stabilization operation is displayed on the display device 65 (in the step S113). The operation of the image pickup device 5 returns to the step S101 when continuously picking up the object image.

The operation of the image pickup device 5 in the step S111 will be described hereinafter with reference to FIG. 17. In the step S111, each pixel of the image including the region of the blur trajectory calculated by the blur trajectory thinning section 115 is treated as the target pixel. In this operation, each target pixel is processed from the step S120 to the step S129, and each adjacent pixel of each target pixel is processed from the step S 121 to the step S 128.

The judgment is firstly made by the blur trajectory thinning section 115 on whether or not the target pixel is on the blur trajectory, i.e. whether or not the value b of the target pixel is 0 (in the step S122). When the judgment is made that the value b of the target pixel is 0, the next adjacent pixel is processed. In this case, the next target pixel is then processed, because of the fact that the result of the judgment in the step S122 is equal to that for other adjacent pixels.

When the judgment is made that the value **b** of the target pixel is not 0, the next judgment is made by the blur trajectory thinning section 115 on whether or not the adjacent pixel is on the blur trajectory, i.e. whether or not the value c of the adjacent pixel is 0 (in the step S123). When the judgment is made that the value c of the adjacent pixel is not 0, the next adjacent pixel is processed.

When the judgment is, on the other hand, made that the value c of the adjacent pixel is 0, the weighted average efficiency **a** of the values of the symmetric adjacent pixels of the adjacent pixel is calculated by the blur trajectory thinning section 115 (in the step S124). The proportion **R** of the weighted average efficiency a to the value **b** of the target pixel is then calculated by the blur trajectory thinning section 115 (in the step S125).

The judgment is then made by the blur trajectory thinning section 115 on whether or not the calculated proportion **R** is higher than or equal to the predetermined threshold (in the step S126). When the judgment is made that the calculated proportion **R** is not higher than or equal to the predetermined threshold, the next adjacent pixel is processed.

When the judgment is, on the other hand, made that the calculated proportion **R** is higher than or equal to the predetermined threshold, the target pixel is removed from the blur trajectory, i.e. the value **b** of the target pixel is set by the blur trajectory thinning section 115 to 0 (in the step S127).

In case that the value **b** of the target pixel is not set to 0 in the step S 127, the next adjacent pixel is then processed. Meanwhile, in case that the value b of the target pixel is set to 0 in the step S127, the next target pixel is then processed due to the judgment in the step S122.

As will be seen from the foregoing description, it is to be understood that the preferred embodiment of the image pickup device 5 is designed to produce the stabilized appropriate exposure image on the basis of the thinned blur trajectory. The image pickup device 5 can reduce a false contour and blur occurring in the stabilized image by an influence of the noise included in the appropriate and short-time exposure images, and an influence of a computational error of the Fourier transform.

(Sixth Preferred Embodiment)

The construction of the sixth preferred embodiment of the image pickup device according to the present invention will be described hereinafter.

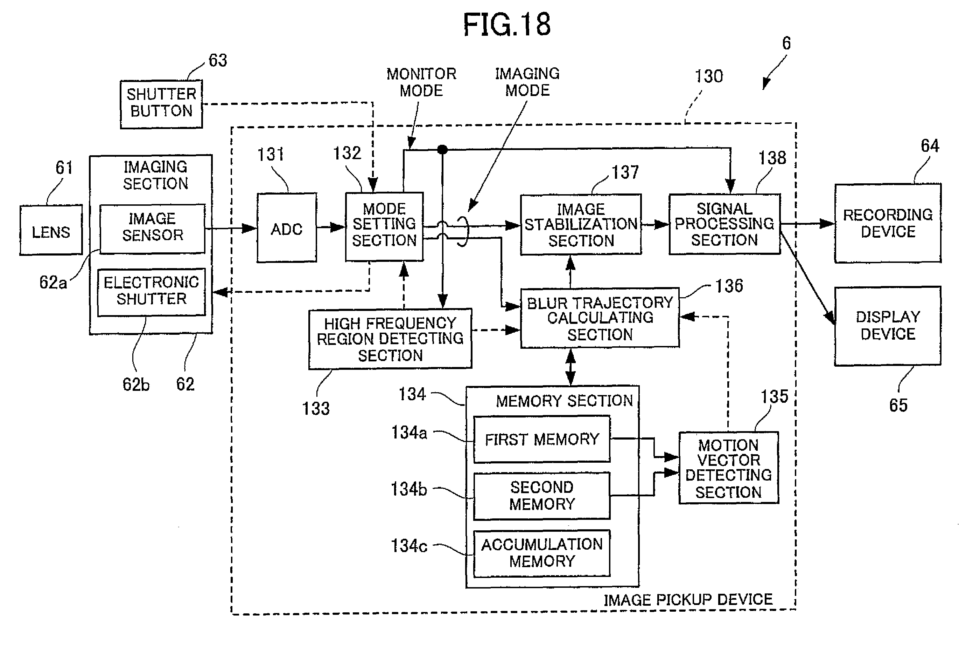

As shown in FIG. 18, the preferred embodiment of the image pickup device 6 comprises an image processor 130 in place of the image processor 70 in contrast to the third preferred embodiment of the image pickup device 3 according to the present invention. The constituent elements other than the image processor 130 will be therefore omitted from the following detailed description and identified by the common reference numerals as that of the third preferred embodiment of the image pickup device 3 according to the present invention.

In FIG. 18, the preferred embodiment of the image processor 130 has an ADC 131 for converting an analog signal outputted from the image sensor 62a into a digital signal, a mode setting section 132 operable to take modes on the basis of the state of the shutter button 63, a high frequency region detecting section 133 for detecting a high frequency region, a memory section 134 for storing therein the image data, a motion vector detecting section 135 for detecting a motion vector, a blur trajectory calculating section 136 for calculating a blur trajectory, an image stabilization section 137 for stabilizing the image by compensating a blur occurring in the object image, and a signal processor 138 for performing predetermined signal processing. The image processor 130 is constituted by a digital signal processor or the like.

The ADC 131, the high frequency region detecting section 133 and the signal processor 138 are respectively constructed in similar to the ADC 71, the high frequency region detecting section 73 and the signal processor 77 of the third preferred embodiment. The ADC 131, the high frequency region detecting section 133 and the signal processor 138 will be therefore omitted from the following detailed description.

The mode setting section 132 is operable to take any of two different modes consisting of a monitor mode and an imaging mode when receiving the signal outputted from the shutter button 63 held down by the user. Under the monitor mode, the object image picked up by the imaging section 62 is displayed on the display device 65 as a video picture under the state that the shutter button 63 is not held down by the user. Under the imaging mode, the object image is picked up when the shutter button 63 is held down by the user to be obtained.

The mode setting section 132 is designed to control, under the imaging mode, the electronic shutter 62b to cause the image sensor 62a to be exposed for the short exposure time more than once. The mode setting section 132 is designed to control, under the monitor mode, the electronic shutter 62b to cause the image sensor 62a to be exposed for the appropriate exposure time to permit the display device 65 to display thereon the video picture.

The mode setting section 132 is designed to control the imaging section 62 to read from the image sensor 62a the signals of pixels of the region indicated by the high frequency region information outputted from the high frequency region detecting section 133, and control imaging section 62 to output the signals to the ADC 131. The mode setting section 132 constitutes the short-time exposure image obtaining section according to the present invention.

The memory section 134 has first and second memories 134a and 134b for sequentially storing therein the image data corresponding to the high frequency region from the plurality of sets of the image data picked up with the short exposure time, and an accumulation memory 134c for adding two sets of the image data respectively stored in the first and second memories 134a and 134b to accumulate therein.

In case that the image sensor 62a is exposed for the short exposure time at three times, the first and second memories 134a and 134b store therein the image data for respective first and second times, and the accumulation memory 134c adds two sets of the image data for respective first and second times, and accumulates therein the added image data. Then, the first memory 134a stores the image data for third time, and the accumulation memory 134c adds two sets of the image data for respective second and third times, and accumulates therein the added image data.

The motion vector detecting section 135 is designed to detect the motion vector by comparing the image data stored in the first memory 134a with the image data stored in the second memory 134b, and obtain a motion vector value including the direction and length of the motion vector. The motion vector detecting section 135 is designed to obtain the motion vector value when the image data stored in the first or second memory 134a or 134b is updated. The motion vector detecting section 135 has a memory (not shown in the figures) to accumulate sequentially therein the added motion vector value.

The blur trajectory calculating section 136 is designed to calculate the blur trajectory on the basis of the motion vector value obtained by the motion vector detecting section 135. The blur trajectory calculating section 136 constitutes the image stabilization trajectory calculating section according to the present invention.

The image stabilization section 137 is designed to compensate the blur of the object image picked up by the imaging section 62 on the basis of the blur trajectory calculated by the blur trajectory calculating section 136. The image stabilization section 137 constitutes the image stabilization trajectory calculating section and the stabilized image producing section according to the present invention.

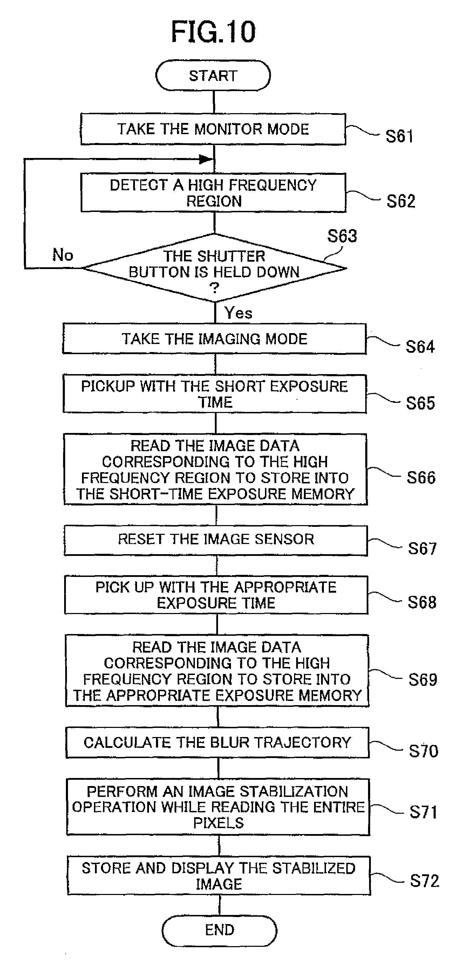

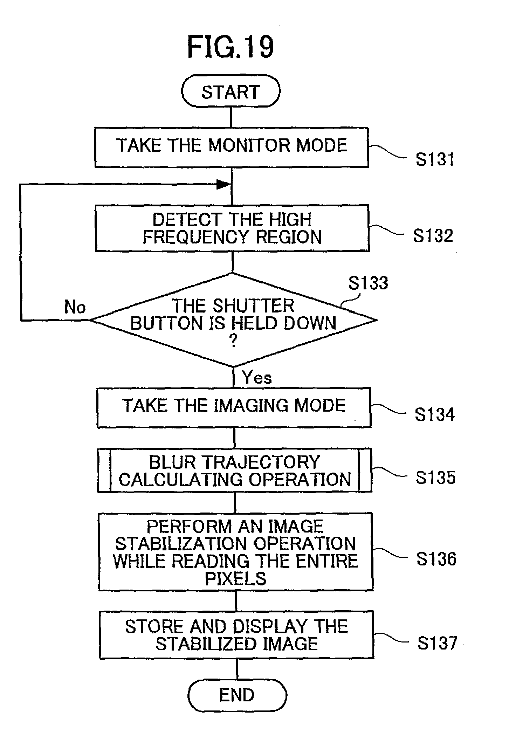

The operation of the preferred embodiment of the image pickup device 6 will be described hereinafter with reference to FIG. 19. As shown in FIG. 19, the steps S131 to S134 in the operation of the preferred embodiment of the image pickup device 6 are similar to the respective steps S61 to S64 (shown in FIG. 10), and will be therefore omitted from the following detailed description.

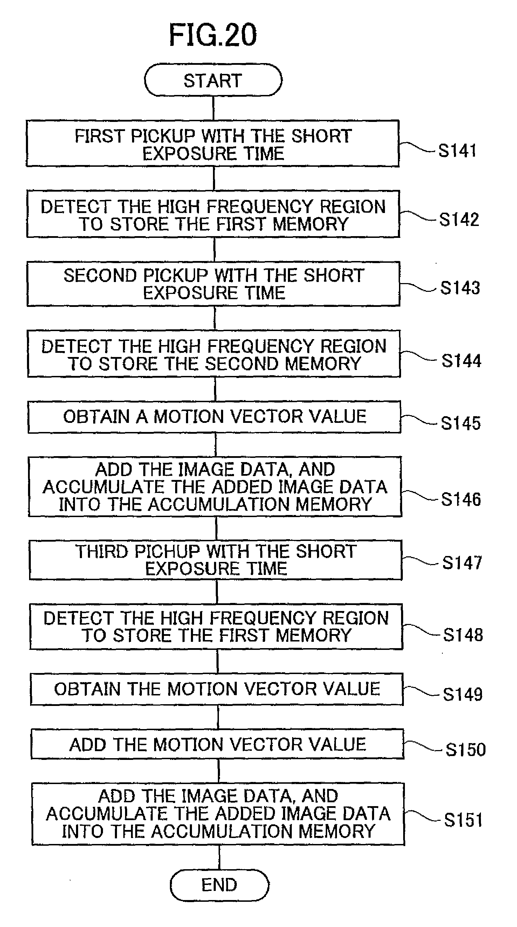

After the mode setting section 132 is set to the imaging mode in the step S134, a blur trajectory calculating operation is executed (in the step S135). The blur trajectory calculating operation will be described hereinafter with reference to FIG. 20. In the following description, it will be described for the better understanding of the operation that three object images are picked up at three times with short exposure time, but it is not intended to limit the present invention to the description. In the present invention, the object images may be picked up two or more times with short exposure time.

The first pickup is firstly made by the electronic shutter 62b controlled by the mode setting section 132 to cause the image sensor 62a to be exposed for the short exposure time (in the step S141).

The high frequency region information is then read by the mode setting section 132 from the memory of the high frequency region detecting section 133. The imaging section 62 is then controlled by the mode setting section 132 to output the firstly picked up image data corresponding to the high frequency region from the image data firstly picked up with the short exposure time. The firstly picked up image data is then outputted from the image sensor 62a to the ADC 131. The image data is converted by the ADC 71 into the digital image data. The image data is then outputted to the blur trajectory calculating section 136 via the mode setting section 132, and stored by the blur trajectory calculating section 136 into the first memory 134a (in the step S 142).

The second pickup is then made with the short exposure time in a similar way to the step S141 (in the step S143).

The secondly picked up image data corresponding to the high frequency region in the image data secondly picked up with short exposure time is then stored by the blur trajectory calculating section 136 into the second memory 134b in a similar way to the step S142 (in the step S 144).

The comparison is then made by the motion vector detecting section 135 between the firstly picked up image data stored in the first memory 134a and the secondly picked up image data stored in the second memory 134b to detect the motion vector. The value of the motion vector is then obtained (in the step S145). The data indicative of the value of the motion vector is stored into the memory of the motion vector detecting section 135.

The firstly picked up image data stored in the first memory 134a is then added by the blur trajectory calculating section 136 to the secondly picked up image data stored in the second memory 134b. The added image data is then stored by the blur trajectory calculating section 136 into the accumulation memory 134c (in the step S1146).

The third pickup is then made with the short exposure time in a similar way to the step S141 (in the step S147).

The thirdly picked up image data corresponding to the high frequency region in the image data thirdly picked up with short exposure time is then stored by the blur trajectory calculating section 136 into the first memory 134a in a similar way to the step S 142 (in the step S 148).

The comparison is then made by the motion vector detecting section 135 between the thirdly picked up image data stored in the first memory 134a and the secondly picked up image data stored in the second memory 134b to detect the motion vector in a similar way to the step S145. The motion vector value is then obtained (in the step S149).

The data indicative of the motion vector value obtained in the step S145 is then added by the motion vector detecting section 135 to the data indicative of the motion vector value obtained in the step S149 (in the step S150). The added data is stored into the memory of the motion vector detecting section 135. The added data indicative of the motion vector value is then outputted by the motion vector detecting section 135 to the blur trajectory calculating section 136 as the data indicative of the blur trajectory.

The thirdly picked up image data stored in the first memory 134a is then added by the blur trajectory calculating section 136 to the secondly picked up image data stored in the second memory 134b in a similar way to the step S146. The added image data is then stored by the blur trajectory calculating section 136 into the accumulation memory 134c (in the step S151). As a result, three sets of the image data corresponding to the high frequency region in the image data picked up with the short exposure time is accumulated into the accumulation memory 134c. The blur trajectory calculating operation is then completed, and the operation of the image pickup device 6 proceeds to the step S136 in FIG. 19.

The imaging section 62 is then controlled by the mode setting section 132 to output the data of the entire pixels, and the data of the entire pixels is outputted to the blur trajectory calculating section 136 via the ADC 131. The image stabilization operation is performed by the image stabilization section 137 on the basis of the blur trajectory obtained by the blur trajectory calculating section 136, while the entire pixels is read by the image stabilization section 137 as shown in FIG. 11(b) (in the step S136). In the image stabilization operation, for example, pixel data is moved a distance in pixels corresponding to the blur trajectory. As a result, the blur occurring in the object image is compensated. In particular, the image stabilization operation for stabilizing the image in the high frequency region is performed on the image data stored in the accumulation memory 134c.

In case of reading the image data corresponding to the high frequency region from the image data picked up by the image sensor 62a with the short exposure time, a light signal from the object is not accumulated in the pixel region corresponding to the high frequency region. This leads to the fact that the difference in level between the image corresponding to the high frequency region and the image corresponding to the other region occurs. In this case, the difference can be reduced by multiplying the image data corresponding to the high frequency region by a correction value in accordance with the difference.

The image data subjected to the image stabilization operation is then outputted to the signal processor 138. The image data is then converted by the signal processor 138 into the predetermined formatted image data, and outputted to the record and display devices 64 and 65.

The image data subjected to the image stabilization operation is then recorded into the record device 64, and the object image indicated by the image data subjected to the image stabilization operation is displayed on the display device 65 (in the step S137). The operation of the image pickup device 6 returns to the step S131 when continuously picking up the object image.

As will be seen from the foregoing description, it is to be understood that the image stabilization section 137 is designed to compensate the blur of the object image on the basis of the blur trajectory obtained from the relationship between the plurality of the images picked up with the short exposure time. This leads to the fact that the preferred embodiment of the image pickup device 6 is not required to have a dedicated device for detecting the blur like the conventional image pickup device. The image pickup device 6 is therefore lower in production cost and smaller in size than the conventional image pickup device.

It is also to be understood that the memory section 134 is constructed to store therein the short-time exposure image limited to the high frequency regions detected by the high frequency region detecting section 133. This leads to the fact that the preferred embodiment of the image pickup device 6 can be provided with a memory having a capacity smaller than the capacity of a memory that stores therein image data indicative of one frame of the short-time exposure image. This results in a reduction in the size of the memory of the imaging device 3. The image pickup device 6 is therefore smaller in size, lighter in weight and lower in production cost than the conventional image pickup device.

With the first to sixth preferred embodiments of the present invention, the image pickup device according to the present invention may be constituted by the combination of the features of the embodiments. The combination of the features of the embodiments can be obvious to a person having ordinary skill in the art with reference to the first to sixth preferred embodiments of the present invention. The combination of the features of the embodiments is therefore omitted from the description since it can be easily realized in accordance with the first to sixth embodiments.

**Industrial Applicability**

As will be seen from the foregoing description, the image pickup device according to the present invention is lower in production cost and smaller in size than the conventional image pickup device, and is available for an image pickup device for compensating a blur occurring in an object image by vibration of the image pickup device at the time of taking the object image with a solid-state image sensor or the like.

**Claims**

1. An image pickup device comprising:

   an image sensor having an acceptance surface to pick up an image focused on said acceptance surface;
   an image stabilization section for stabilizing said image by compensating a blur occurring in said image on the basis of at least two different images picked up by said image sensor exposed for each different exposure time; and
   an output section for outputting said stabilized image.

2. An image pickup device as set forth in claim 1, wherein said image stabilization section includes:

   an appropriate exposure image obtaining section for obtaining an appropriate exposure image from said image sensor exposed for an appropriate exposure time;
   a short-time exposure image obtaining section for obtaining a short-time exposure image from said image sensor exposed for a short exposure time shorter than said appropriate exposure time;
   an image stabilization trajectory calculating section for calculating an image stabilization trajectory of said appropriate exposure image on the basis of said appropriate and short-time exposure images; and
   a stabilized image producing section for producing said stabilized image on the basis of said appropriate exposure image and said image stabilization trajectory.

3. An image pickup device as set forth in claim 2, wherein said image sensor has a pixel region formed with a plurality of pixels; and said appropriate and short-time exposure image obtaining sections are designed to obtain said respective appropriate and short-time exposure images from a specific region constituting a part of said pixel region.

4. An image pickup device as set forth in claim 3, wherein said appropriate and short-time exposure image obtaining sections are designed to read data of said specific region from said image sensor to obtain said respective appropriate and short-time exposure images.

5. An image pickup device as set forth in claim 3, further comprising a high frequency region detecting section for detecting said specific region from said pixel region, said high frequency region having a spatial frequency higher than a predetermined spatial frequency.

6. An image pickup device as set forth in claim 2, further comprising a pixel resetting section for resetting all of said pixels of said pixel region at a predetermined short time after said short-time exposure image is obtained.

7. An image pickup device as set forth in claim 2, wherein said image stabilization trajectory calculating section is designed to perform Fourier transforms on said respective appropriate and short-time exposure images, and divide said transformed short-time exposure image by said transformed appropriate exposure image to calculate said image stabilization trajectory in a frequency domain.

8. An image pickup device as set forth in claim 2, wherein said image stabilization trajectory calculating section is designed to perform Fourier transforms on said respective appropriate and short-time exposure images, divide said transformed appropriate exposure image by said transformed short-time exposure image to calculate a blur trajectory, perform a thinning on said blur trajectory, and calculate said image stabilization trajectory in a frequency domain on the basis of said thinned blur trajectory.

9. An image pickup device as set forth in claim 7, wherein said stabilized image producing section is designed to perform an inverse Fourier transform on said image stabilization trajectory in said frequency domain, and convolve said image stabilization trajectory transformed by the inverse Fourier transform with said appropriate exposure image obtained by said appropriate exposure image obtaining section to produce said stabilized image.

10. An image pickup device as set forth in claim 7, wherein
said stabilized image producing section is designed to multiply said appropriate exposure image transformed by the Fourier transform of said image stabilization trajectory calculating section by said image stabilization trajectory in said frequency domain, and perform an inverse Fourier transform on said multiplied appropriate exposure image to produce said stabilized image.

11. An image pickup device as set forth in claim 2, wherein:

said image stabilization trajectory calculating section includes
an image reducing section for performing spatial resolution conversions to reduce said appropriate and short-time exposure images,
a reduced image stabilization section for stabilizing said reduced appropriate exposure image on the basis of said reduced appropriate and short-time exposure images, and
a difference image calculating section for calculating a difference between said appropriate exposure image reduced by said image reducing section and said appropriate exposure image stabilized by said reduced image stabilization section to obtain a difference image; and
said stabilized image producing section includes
a difference image magnifying and adding section for magnifying said difference image and adding said magnified difference image to said appropriate exposure image obtained by said appropriate exposure image obtaining section.

12. An image pickup device as set forth in claim 2, wherein said image stabilization section includes
a noise-cancellation section for cancelling noise from said appropriate and short-time exposure images, and
said image stabilization trajectory calculating section is designed to calculate said image stabilization trajectory on the basis of said noise-cancelled appropriate and short-time exposure images.

13. An image pickup device as set forth in claim 12, wherein
said noise-cancellation section is constituted by a high cut filter having a cutoff frequency between 5 and 20Hz.

14. An image pickup device as set forth in claim 1, wherein said image stabilization section includes:

a short-time exposure image obtaining section for obtaining a plurality of short-time exposure images from said image sensor exposed for short exposure time;
an image stabilization trajectory calculating section for calculating an image stabilization trajectory intended for any of said short-time exposure images on the basis of said plurality of short-time exposure images; and
a stabilized image producing section for producing said stabilized image on the basis of said intended short-time exposure image and said image stabilization trajectory.

## FIG.1

EP 2 007 133 A2

# FIG.2

EP 2 007 133 A2

# FIG.3

```
        ( START )
            │
            ▼
┌─────────────────────┐      S11
│  IMAGE STABILIZING  │
└─────────────────────┘
            │
            ▼
┌─────────────────────┐      S12
│     OUTPUT THE      │
│  STABILIZED IMAGE   │
└─────────────────────┘
            │
            ▼
        (  END  )
```

# FIG.4

START

OBTAIN A SHORT-TIME
EXPOSURE IMAGE — S21

OBTAIN AN APPROPRIATE
EXPOSURE IMAGE — S22

CALCULATE AN IMAGE
STABILIZATION TRAJECTORY — S23

PRODUCE THE STABILIZED IMAGE — S24

END

# FIG.5

START

↓

PRODUCE A FREQUENCY DOMAIN SHORT-TIME EXPOSURE IMAGE — S31

↓

PRODUCE A FREQUENCY DOMAIN APPROPRIATE EXPOSURE IMAGE — S32

↓

CALCULATE A FREQUENCY DOMAIN IMAGE STABILIZATION TRAJECTORY — S33

↓

END

# FIG.6

START

CALCULATE A TIME DOMAIN IMAGE
STABILIZATION TRAJECTORY

S41

CONVOLUTION

S42

END

# FIG.7

# FIG.8

START

OBTAIN THE SHORT-TIME EXPOSURE IMAGE — S51

OBTAIN THE APPROPRIATE EXPOSURE IMAGE — S52

CANCEL A NOISE FROM THE SHORT-TIME EXPOSURE IMAGE — S53

CANCEL A NOISE FROM THE APPROPRIATE EXPOSURE IMAGE — S54

CALCULATE THE IMAGE STABILIZATION TRAJECTORY — S55

PRODUCE THE STABILIZED IMAGE — S56

END

# FIG.9

EP 2 007 133 A2

# FIG.10

```
        ( START )
            │
┌──────────────────────────────┐
│   TAKE THE MONITOR MODE       │── S61
└──────────────────────────────┘
            │
   ┌───────►│
   │┌──────────────────────────────┐
   ││  DETECT A HIGH FREQUENCY      │── S62
   ││        REGION                 │
   │└──────────────────────────────┘
   │        │
   │      ╱   ╲     S63
No │    ╱ THE SHUTTER ╲
   └──◄ BUTTON IS HELD DOWN ►
       ╲     ?      ╱
         ╲       ╱
            │ Yes
┌──────────────────────────────┐
│   TAKE THE IMAGING MODE        │── S64
└──────────────────────────────┘
            │
┌──────────────────────────────┐
│  PICKUP WITH THE SHORT EXPOSURE│── S65
│          TIME                  │
└──────────────────────────────┘
            │
┌──────────────────────────────┐
│    READ THE IMAGE DATA         │
│  CORRESPONDING TO THE HIGH     │── S66
│ FREQUENCY REGION TO STORE INTO │
│ THE SHORT-TIME EXPOSURE MEMORY │
└──────────────────────────────┘
            │
┌──────────────────────────────┐
│     RESET THE IMAGE SENSOR     │── S67
└──────────────────────────────┘
            │
┌──────────────────────────────┐
│   PICK UP WITH THE APPROPRIATE │── S68
│        EXPOSURE TIME           │
└──────────────────────────────┘
            │
┌──────────────────────────────┐
│    READ THE IMAGE DATA         │
│  CORRESPONDING TO THE HIGH     │── S69
│ FREQUENCY REGION TO STORE INTO │
│ THE APPROPRIATE EXPOSURE MEMORY│
└──────────────────────────────┘
            │
┌──────────────────────────────┐
│   CALCULATE THE BLUR TRAJECTORY│── S70
└──────────────────────────────┘
            │
┌──────────────────────────────┐
│  PERFORM AN IMAGE STABILIZATION│
│ OPERATION WHILE READING THE ENTIRE │── S71
│          PIXELS                │
└──────────────────────────────┘
            │
┌──────────────────────────────┐
│  STORE AND DISPLAY THE STABILIZED│── S72
│          IMAGE                 │
└──────────────────────────────┘
            │
        ( END )
```

# FIG.11

80

(a)

82

81

83

80

(b)

A

# FIG.12

# FIG.13

```
( START )
        |
TAKE THE MONITOR MODE                                  — S81
        |
DETECT THE HIGH FREQUENCY REGION                       — S82
        |
     < THE SHUTTER                               S83
No     BUTTON IS HELD DOWN >
        ?
       Yes |
TAKE THE IMAGING MODE                                  — S84
        |
PICK UP WITH THE SHORT EXPOSURE TIME                   — S85
        |
READ THE IMAGE DATA CORRESPONDING TO                   — S86
THE HIGH FREQUENCY REGION
        |
REDUCE THE IMAGE DATA CORRESPONDING                    — S87
TO THE HIGH FREQUENCY REGION
        |
STORE THE REDUCED IMAGE DATA INTO THE                  — S88
SHORT-TIME EXPOSURE MEMORY
        |
RESET THE IMAGE SENSOR                                 — S89
        |
PICK UP WITH THE APPROPRIATE EXPOSURE                  — S90
TIME
        |
READ THE IMAGE DATA CORRESPONDING TO                   — S91
THE HIGH FREQUENCY REGION
        |
REDUCE THE IMAGE DATA CORRESPONDING                    — S92
TO THE HIGH FREQUENCY REGION
        |
STORE THE REDUCED IMAGE DATA INTO THE                  — S93
APPROPRIATE EXPOSURE MEMORY
        |
CALCULATE THE BLUR TRAJECTORY                          — S94
        |
CALCULATE THE IMAGE STABILIZATION                      — S95
TRAJECTORY
        |
IMAGE STABILIZATION                                    — S96
        |
CALCULATE A DIFFERENCE IMAGE                           — S97
        |
MAGNIFY AND ADD THE DIFFERENCE IMAGE WHILE             — S98
READING THE ENTIRE PIXELS
        |
STORE AND DISPLAY THE STABILIZED IMAGE                 — S99
        |
    ( END )
```

# FIG.14

EP 2 007 133 A2

# FIG.15

(a)

(b)

(c)

(d)

(e)

# FIG.16

```
          ( START )
              |
   TAKE THE MONITOR MODE        ── S101
              |
   DETECT THE HIGH FREQUENCY    ── S102
             REGION
              |
         /  THE SHUTTER  \                S103
  No ─── < BUTTON IS HELD DOWN >
         \      ?       /
              | Yes
   TAKE THE IMAGING MODE        ── S104
              |
   PICK UP WITH THE SHORT       ── S105
        EXPOSURE TIME
              |
 READ THE IMAGE DATA CORRESPONDING TO THE
 HIGH FREQUENCY REGION TO STORE INTO THE  ── S106
     SHORT-TIME EXPOSURE MEMORY
              |
   RESET THE IMAGE SENSOR       ── S107
              |
   PICK UP WITH THE APPROPRIATE ── S108
        EXPOSURE TIME
              |
 READ THE IMAGE DATA CORRESPONDING TO THE
 HIGH FREQUENCY REGION TO STORE INTO THE  ── S109
   APPROPRIATE EXPOSURE MEMORY
              |
   CALCULATE THE BLUR           ── S110
        TRAJECTORY
              |
 PERFORM A THINNING ON THE BLUR ── S111
        TRAJECTORY
              |
 PERFORM AN IMAGE STABILIZATION
 OPERATION WHILE READING THE    ── S112
        ENTIRE PIXELS
              |
   STORE AND DISPLAY THE        ── S113
      STABILIZED IMAGE
              |
          ( END )
```

# FIG.17

START

FOR EACH TARGET PIXEL — S120

FOR EACH ADJACENT PIXEL — S121

S122

THE VALUE OF
THE TARGET PIXEL
b = 0 ?  — Yes

No

S123

THE VALUE OF
THE ADJACENT PIXEL
c = 0 ?  — No

Yes

CALCULATE WEIGHTED AVERAGE
EFFICIENCY a OF THE VALUES OF
THE SYMMETRIC ADJACENT PIXELS — S124
AS a = (a1 + 2 × a2 + a3) / 4

CALCULATE PROPORTION R = a / b — S125

S126

THE PROPORTION R ≧
THRESHOLD TH ?  — No

Yes

THE VALUE OF THE TARGET
PIXEL b ← 0  — S127

NEXT ADJACENT PIXEL — S128

NEXT TARGET PIXEL — S129

END

# FIG.18

EP 2 007 133 A2

# FIG.19

START

TAKE THE MONITOR MODE — S131

DETECT THE HIGH
FREQUENCY REGION — S132

S133

No — THE SHUTTER
BUTTON IS HELD DOWN
?

Yes

TAKE THE IMAGING MODE — S134

BLUR TRAJECTORY
CALCULATING OPERATION — S135

PERFORM AN IMAGE
STABILIZATION OPERATION
WHILE READING THE ENTIRE
PIXELS — S136

STORE AND DISPLAY THE
STABILIZED IMAGE — S137

END

# FIG.20

START

FIRST PICKUP WITH THE SHORT EXPOSURE TIME ~S141

DETECT THE HIGH FREQUENCY REGION TO STORE THE FIRST MEMORY ~S142

SECOND PICKUP WITH THE SHORT EXPOSURE TIME ~S143

DETECT THE HIGH FREQUENCY REGION TO STORE THE SECOND MEMORY ~S144

OBTAIN A MOTION VECTOR VALUE ~S145

ADD THE IMAGE DATA, AND ACCUMULATE THE ADDED IMAGE DATA INTO THE ACCUMULATION MEMORY ~S146

THIRD PICHUP WITH THE SHORT EXPOSURE TIME ~S147

DETECT THE HIGH FREQUENCY REGION TO STORE THE FIRST MEMORY ~S148

OBTAIN THE MOTION VECTOR VALUE ~S149

ADD THE MOTION VECTOR VALUE ~S150

ADD THE IMAGE DATA, AND ACCUMULATE THE ADDED IMAGE DATA INTO THE ACCUMULATION MEMORY ~S151

END

**EP 2 007 133 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005184122 A